# EUROPEAN PATENT SPECIFICATION

(11) **EP 3 668 467 B1**
(45) Date of publication and mention of the grant of the patent: **09.07.2025**
(21) Application number: 18846543.9
(22) Date of filing: 16.08.2018
(51) Int. Cl.: A61G 5/06, B60L 50/60, A61G 5/04

(54) **ELECTRIC CONVENIENCE VEHICLE (ECV) WITH CONTROL AND COMMUNICATIONS UNIT**
ELEKTROMOBILE (ECV) MIT STEUERUNGS- UND KOMMUNIKATIONSEINHEIT
VÉHICULE ÉLECTRIQUE SANS PERMIS (ECV) AVEC UNITÉ DE COMMANDE ET DE COMMUNICATION

(30) Priority: 16.08.2017 US 201762546474 P; 17.08.2017 US 201715680054
(43) Date of publication of application: 24.06.2020
(73) Proprietor: Scooterbug, Inc., Orlando, FL 32809 (US)
(72) Inventor: MEEHAN, Christopher, Palm Coast, FL 32137 (US); BARBER, Marc, M., Deltona, FL 32725 (US); RING, Kurt, D., Andover, MA 01810 (US); FLETCHER, Colt, Wright, Orlando, FL 32804 (US); ZANIKER, John, Thomas, Savaerna Park, MD 21146 (US); RODRIGUEZ, Tomas, Orlando, FL 32809 (US); SWOGGER, Wesley, Edward, Fairfax Station, VA 22039 (US); GUNNER, Hal, Lake Mary, FL 32159 (US)
(74) Representative: Murgitroyd & Company
(86) International application number: PCT/US2018/000153
(87) International publication number: WO 2019/035888

(56) References cited:
- WO-A1-2011/081617
- WO-A1-2019/032566
- CN-B- 107 233 168
- KR-A- 20140 128 086
- US-A- 6 050 593
- US-A1- 2011 295 452
- US-A1- 2015 348 416
- US-A1- 2015 348 416
- US-A1- 2016 014 252
- US-A1- 2016 075 177
- US-A1- 2017 098 273
- US-A1- 2018 056 985
- US-A1- 2018 101 179
- US-B2- 7 762 231

## Description

### FIELD OF THE INVENTION

The present invention relates to electric convenience vehicles, and more specifically, to electric convenience vehicles including a user interface.

### BACKGROUND

Theme parks and other public venues, such as sports and concert venues, zoos, and other public and private venues have long been enjoyed by crowds of all ages. Other types of facilities, such as airports, hospitals, malls, retail stores, and so forth, have similar types of crowds. As understood by venue operators, crowds have a certain percentage of individuals who need assistance with walking due to injury, illness, age, or otherwise, and are generally referred to as handicapped individuals.

As has become both public policy and good business, venues often provide for powered vehicles, generally referred to as electric convenience vehicles (ECVs), that are self-propelled to enable handicapped individuals who have physical handicaps that prevent or limit walking to participate at the venue. Existing ECVs include electric powered scooters on which a handicapped individual may drive throughout the day to access different parts of a venue. Conventional ECVs are relatively simplistic, and typically include a chair mounted on a frame with wheels and a steering mechanism. A motor on the ECV is controlled to propel the ECV forward or backward by the use of a throttle, generally located on or near handles of the steering mechanism.

The ECVs, depending on the venue, may be rented to visitors by the facility or a third-party provider. Other facilities allow for a user to borrow ECVs while at the venue. While these ECVs are helpful to the handicapped individuals, the venues and owners/operators of the ECVs do not receive commercial benefit during rental periods of the ECVs beyond rental rates by the handicapped individuals. Hence, ECVs that provide additional commercial benefits to the owners/operators of the ECVs, while increasing functionality and experience to the users of the ECVs, are desirable. US2018/101179A1 describes autonomous personal mobility systems, US2015/348416A1 describes an obstacle detection device and an electric-powered vehicle provided therewith, and WO2019/032566A1 describes a compact electric convenience vehicle.

### SUMMARY

The present invention is set out in the independent claims whereas preferred embodiments and further implementations are outlined in the dependent claims, description and figures.

### BRIEF DESCRIPTION OF THE DRAWINGS

A more complete understanding of the method and apparatus of the present invention may be obtained by reference to the following Detailed Description when taken in conjunction with the accompanying Drawings wherein:
**FIGS. 1A-1J** are illustrations of an illustrative electric convenience vehicle (ECV) that includes a control and communications unit (CCU), sensors configured to sense objects in front of the ECV, and other features that provide for safety and an improved user experience within a venue;
**FIGS. 2A** and **2B** are schematics showing sensors positioned on the ECV used to sense objects in front of and around the ECV and further sense whether or not a user is sitting on the seat;
**FIGS. 3A-3C** are illustrations of an illustrative ECV inclusive of a cover or canopy that may be mounted to the seat of **FIG 3A****,** and used to cover a user from sun and rain, for example, while operating the ECV;
**FIGS. 4A-4C** are illustrations of an illustrative lockbox that may be affixed behind a backrest of a seat of an ECV;
**FIG. 5** is an illustration of an illustrative CCU disposed on top of a tiller of an ECV, such as shown in **FIG. 1A****;**
**FIGS. 6A** and **6B** are illustrations of an illustrative ECV showing sensing zones from sensors disposed on the ECV;
**FIG. 7** is an illustration of an illustrative ECV showing a sensor mounted on a tiller of the ECV along with a sensing pattern created by the sensor;
**FIG. 8** is an illustration of an illustrative ECV that provides for standing by a user, and may include multiple sensors positioned on a tiller of the ECV along with a CCU disposed on a front member, in this case centered on a steering mechanism, to enable the user to view the CCU while operating the ECV;
**FIG. 9** is a block diagram of illustrative electronics used for controlling and operating an ECV and CCU;
**FIG. 10** is a flow diagram of an illustrative CCU control process that is used to manage battery of the CCU;
**FIG. 11** is a flow diagram of an illustrative ECV control process for the CCU to control operation of the ECV;
**FIG. 12** is a flow diagram of an illustrative collision recording process;
**FIG. 13** is an illustration of an illustrative block diagram of a system including software configured to be executed by a CCU of an ECV, and further configured to communicate with server(s) and web browser through one or more communications networks;
**FIG. 14** is an illustration of an illustrative network environment in which electric convenience vehicles are operating;
**FIG. 15** is an illustration of an illustrative CCU operating on an ECV;
**FIG. 16** is a hierarchy of screenshots that represent software operation of a CCU;
**FIGS. 17A-17C** are a sequence of an illustrative process that enables a user to rent and access an ECV;
FIGS. **18A-18G** are screen shots of an illustrative user interface of a CCU that supports rental and usage of an ECV;
**FIG. 19** is an illustration of an illustrative venue, in this case an amusement park, in which a rental area with ECVs may be rented;
**FIG. 20** is an illustrative CCU that displays a user interface with which a user of an ECV; and
**FIGS. 21A** and **21B** are illustrations of a top view and side view of another venue, in this case a hospital, in which ECVs with CCUs are operating.

### DETAILED DESCRIPTION OF THE DRAWINGS

The invention is defined by the appended claims.

### A. Electric Convenience Vehicle (ECV)

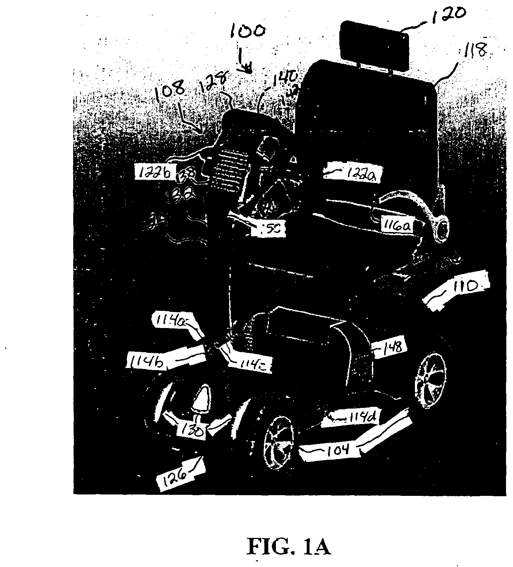

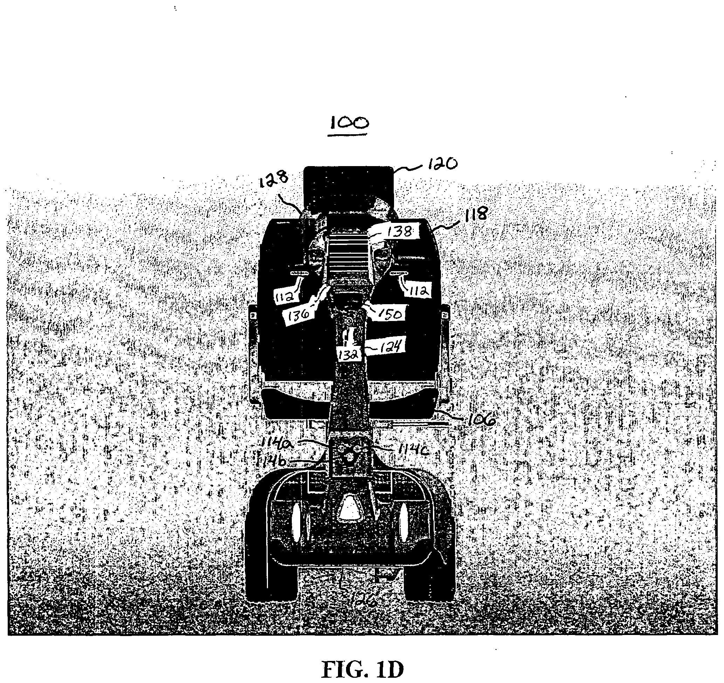

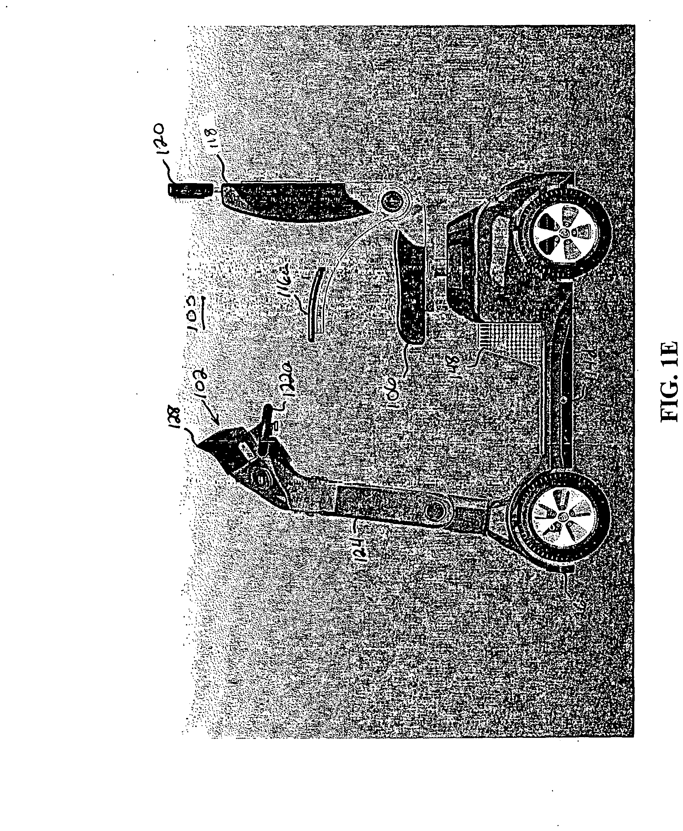

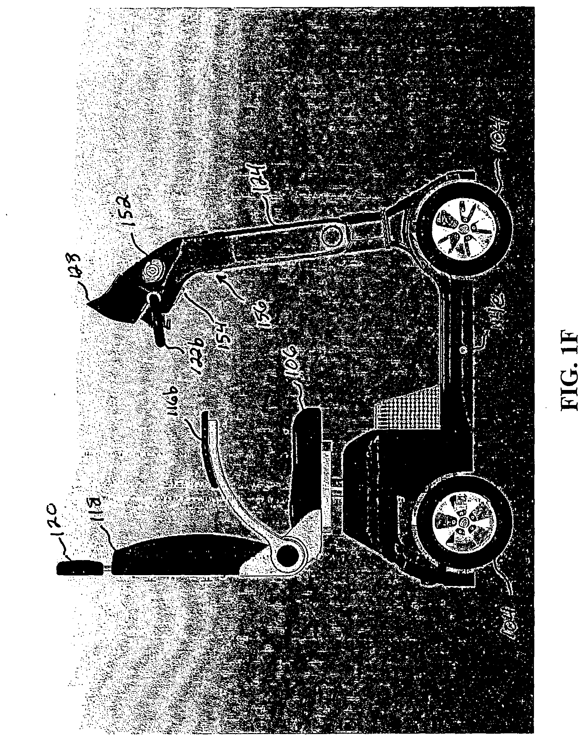

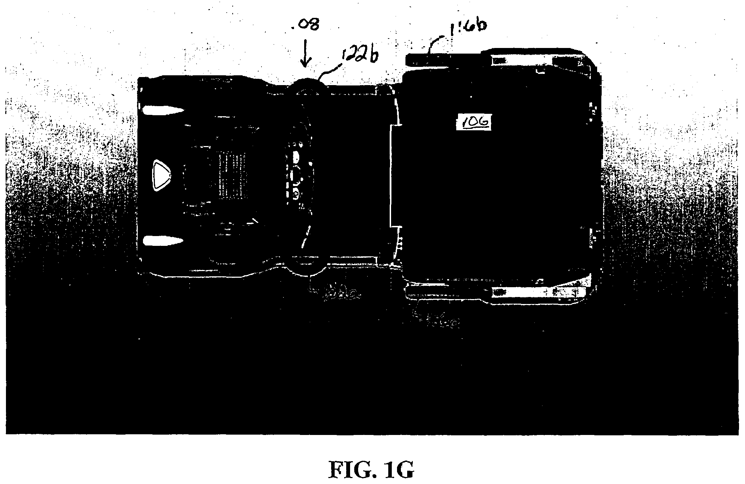

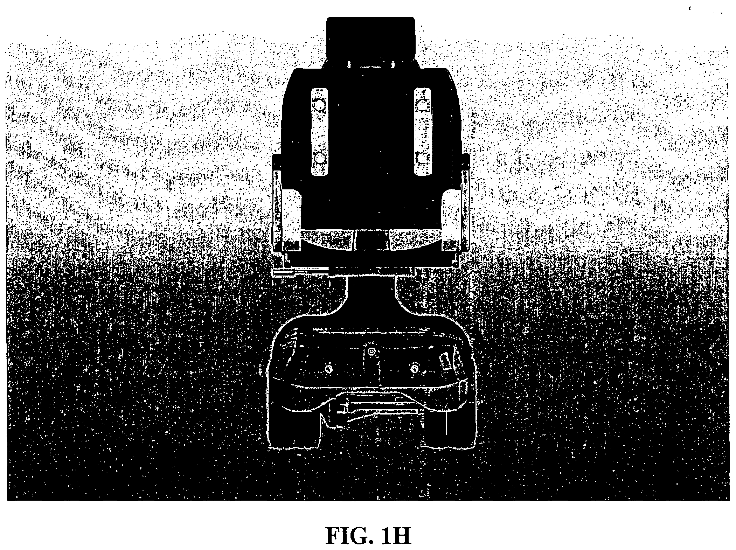

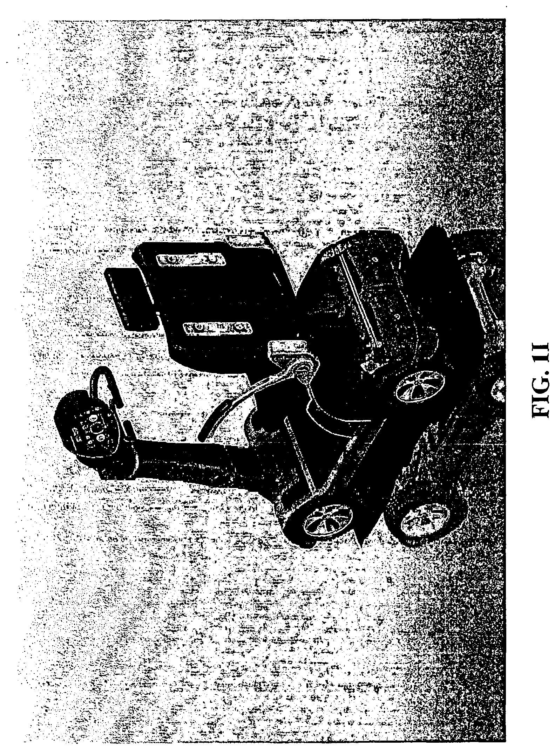

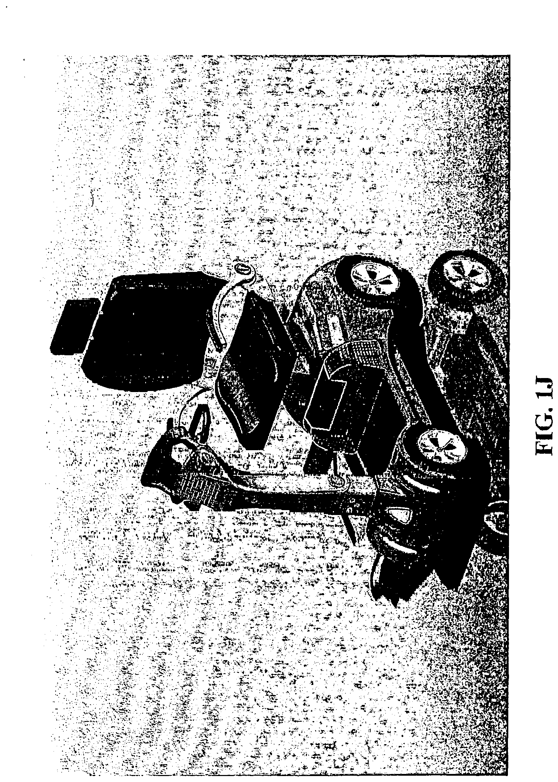

With regard to **FIGS. 1A-1J****,** illustrations of an illustrative electric convenience vehicle (ECV) **100** that includes a control and communications unit (CCU) **102** is shown. The ECV **100** may include a frame (not shown), multiple wheels **104** configured to support and move the frame, a seat **106** supported by the frame, and a steering mechanism **108** disposed toward a front portion of the ECV **100,** and configured to enable a user to rotate direction of one or more wheels **104** to control direction of movement of the ECV **100.** Because the CCU **102** is intended to be used outdoors, the CCU **102** may be waterproof or otherwise protected from rain or other liquids entering a case of the CCU **102.** The CCU **102** may use Android^{®} or any other operating system for controlling operation thereof. In an embodiment, the frame may include or define a chassis (not shown) on which a body **110** is mounted. A motor (not shown) may be configured to cause at least one wheel **104** to rotate forward, rotate backward, or to remain in a fixed position.

A throttle **112,** when set in a first position, causes the motor to propel the wheel(s) **104** in a forward direction, when set in a second position, causes the motor to propel the wheel(s) in a reverse direction, and when set in a third position, causes the motor to maintain the wheel(s) in a fixed position (or be in a neutral or non-engaged state in which the wheel(s) can roll with a force applied to the ECV **100).** It should be understood that the throttle **112** may have a wide variety of physical configurations that provide for the forward, reverse, and maintain position functionality. The throttle **112** may be shaped as a "wig-wag" that has three states or positions, where a resting state is neutral that inhibits motion or does not apply a force to at least one wheel **104,** a left tilt state that applies a forward force to the wheel(s), and a right tilt state that applies a reverse force to the wheel(s).

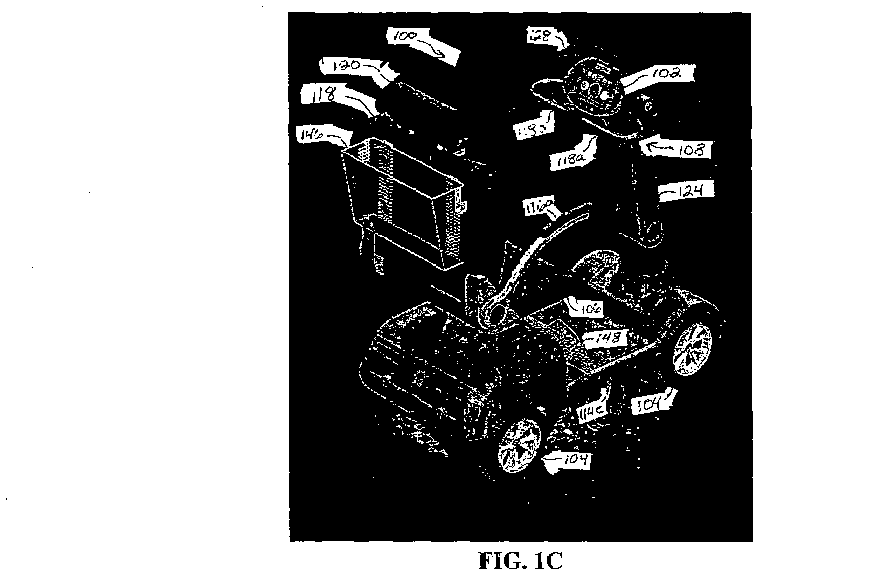

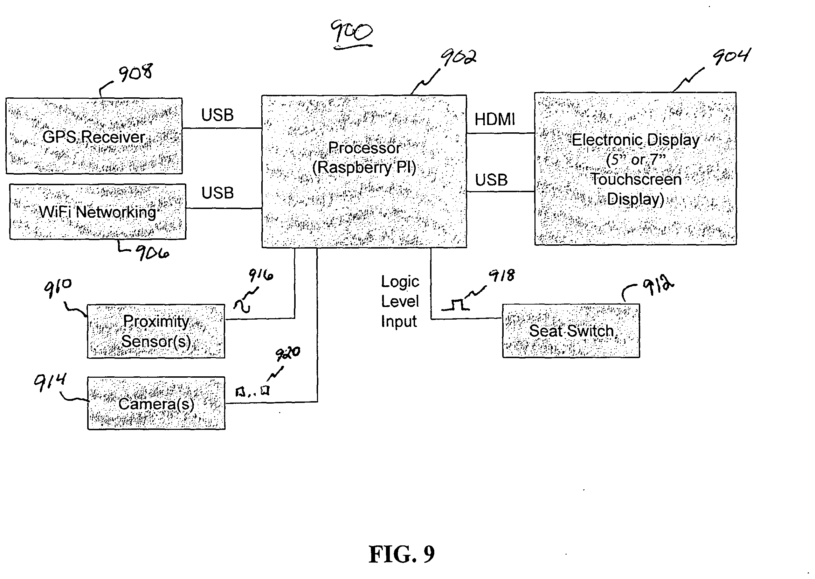

One or more sensors **114a-114c** may be directed to detect objects in front of a direction of travel of the ECV **100,** sensors **114d** and **114e (****FIG. 1C****)** may be directed to the side of the ECV **100** to detect objects to the sides of the ECV **100,** and sensors **114f** and **114g** may be directed to the rear of the ECV **100,** where the collective of the sensors **114a-114g** are referred to herein as sensors **114.** Each of the sensors **114** may be configured generate sense signals (see, for example, **FIG. 9****)** indicative of an object being sensed by any of the sensors **114.**

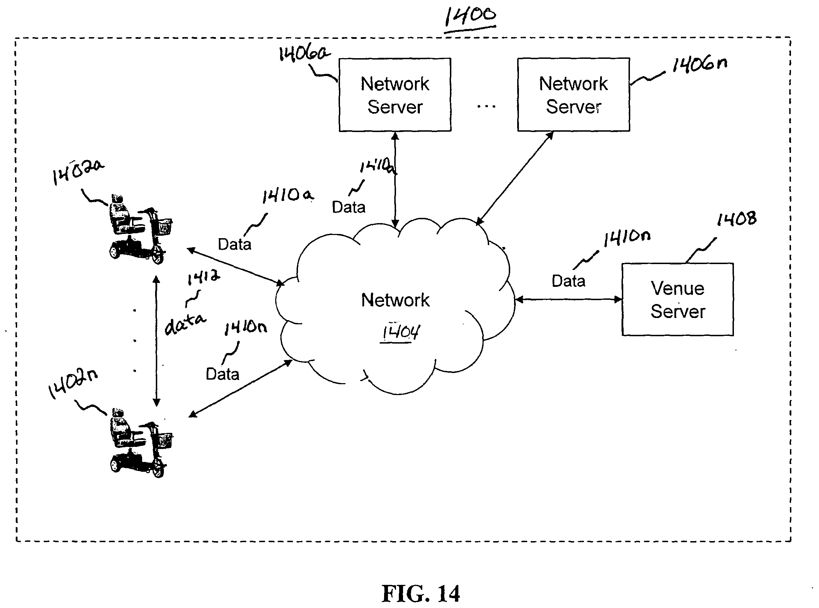

The control and communications unit (CCU) **102** may be disposed in front of the seat **106,** and be configured to receive the sense signals and to control operations of the motor, where the CCU is further configured to communicate over a communications network (see, for example, **FIG. 14****),** such as a CAN bus or other communications bus. The CCU **102** is also referred to herein as an electronic digital dash (EDD). The sensors **114** may be configured to sense objects around (e.g., in front of, to the side, and to the rear of) the ECV **110,** and the CCU **100** and/or other electronic device(s) may be configured to control operations of the CCU **100** so as to provide for (i) safety of the user of the ECV **110** and pedestrians around the ECV **110** and (ii) an improved user experience within a venue (e.g., at an amusement park).

With further regard to **FIG. 1A****,** the ECV 100 the chair **106** is supported by the chassis above the body **110.** In this case, the chair **106** includes armrests **116a** and **116b** (collectively **116)** on each side of the chair **106** to assist a user to get on, get off, and remain on the chair **106,** a backrest **118,** and a headrest **120.** The seat **106** may be height and angle adjustable. The steering mechanism **108** may include handlebars **122a** and **122b** (collectively **122)** that a user uses to control direction of motion of the ECV **100.** The steering mechanism **108** may also include a tiller **124** that extends downwards from the handlebars **122** to the body **110,** and the tiller **124** is configured to rotate in response to the user moving the handlebars **122** that are attached to the tiller **124.**

The sensors **114** are shown to be mounted to the tiller **124** such that the sensors **114** are able to sense objects, such as people, walls, curbs, etc., in front of the direction of travel of the ECV **100.** Moreover, as the sensors **114** are mounted to the tiller **124** that rotates, the sensors **114** sense objects as a function of the angle of the tiller **124,** which is different from sensors that may alternatively be mounted to a front bumper **126** of the ECV **100** that remains stationary, where bumper-mounted sensors (not shown) would sense objects in front of the bumper **126** of the ECV **100** as opposed to an immediate directional change of the tiller **124** that leads a directional change of the ECV **100.** For example, if a user of the ECV **100** turns the tiller **124** by exerting a force on the handlebars **122,** then the sensors **114** sense an object prior to the time that the front bumper **126** of the ECV **100** faces the object.

Other features on the front of the ECV **100** may include lights **130** disposed on the body **110.** The lights **130** in this case include left, right, and center lights that are used for illuminating a path in front of the ECV **100,** but are also ornamental in nature. The CCU **102** may be configured to turn ON and OFF the lights **130.** In an embodiment, the CCU **102** may be configured to turn the left and right lights ON/OFF independent of the center light. In an alternative embodiment, rather than the CCU **102** controlling operation of the lights, a physical component (e.g., button or switch) may control operation of the lights **130.**

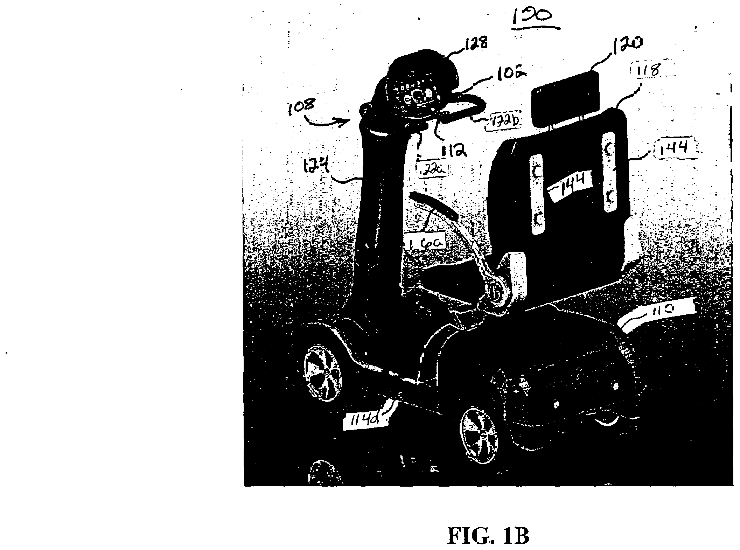

In an embodiment, the tiller **124** may have a front camera **132** disposed thereon for capturing images. The images may include video and/or still images, which may be stored and used in the event of a collision, for example. In an embodiment, the images captured may be low-resolution video images so as to consume less memory than high-resolution images, and communicated from the camera **132** to the CCU **102** for storing and/or processing thereby. In an embodiment, the low-resolution images may be stored daily at a remote server to provide backup video for potential future accident claims. In addition to the front camera **132,** and as shown in **FIG. 1B****,** the ECV **100** may also include one or more rear cameras **134a** and **134b** (collectively **134)** that may also be configured to capture images (e.g., high-resolution images for display and low-resolution images for storage) when the ECV **100** is backing up, and communicate the images to the CCU **102** for storing and/or processing. The captured images (e.g., low-resolution images) may be stored for historical recordation purposes, for example, such as to aid in the event of an accident or collision occurring. High-resolution and/or low-resolution images may be stored to preserve a day of memories for the user.

In addition to the lights **130,** a running/charge indicator light **136** may illuminate in one or more colors using light emitting diodes (LEDs) or other illumination devices to provide a notification to users, operators, and/or pedestrians status information. For example, the running/charge indicator light **136** may be illuminated in white when in run mode (e.g., turned ON and moving or stationary). When being charged by a charger, the light **136** may be illuminated as green when fully charged and in electrical communication with a charger, yellow when not fully charged, and red when not charged. The charger may be a wired or wireless (e.g., capacitive) charger. If not in electrical communication with a charger, then the notification light **136** may notify users whether the ECV **100** is currently being rented or otherwise being used (e.g., green bright/dark/bright transition) or not currently being rented or used (e.g., red bright/dark/bright transitioning), for example. The light **136** may be controlled to display other colors (e.g., orange, purple), patterns, or other illumination signaling for a variety of reasons. For example, the light **136** may flash red if a failure of the ECV **100** or CCU **102** is detected.

A photovoltaic cell **138** may be positioned on the tiller **124,** and in electrical communication with a rechargeable battery (not shown) for use in powering the CCV **100** for providing mobility and/or powering the CCU **102** if a separate battery is included for powering the CCU **102** independent of the battery for powering the motor that propels the ECV **100.** In an embodiment, a main battery and a backup battery may be provided, where the backup battery may be smaller than the main battery, and be used in response to the main battery running out of charge. A light sensor **140** may be provided to sense ambient light, and generate an ambient light signal for use in controlling brightness (e.g., day/night setting) of an electronic device of the CCU **102** so that brightness of the CCU **102** is high during the daytime and low during the nighttime or if the ECV **100** is in a shadow or tunnel, for example. In an embodiment, a USB charger port **142,** which may be in communication with the CCU **102** for downloading and uploading content data (e.g., captured images or videos) or setting information, may be provided to enable a user to charge his or her mobile device or otherwise communicate with the CCU **102.** In an embodiment, dual USB charging ports may be provided to enable multiple electronic devices to be simultaneously charged.

With regard to **FIG. 1B****,** a rear perspective view of the ECV **100** is shown. In this view, the CCU **102** disposed at a top portion of the tiller **124** above the height of handlebars **122** is shown. It should be understood that alternative configurations may be utilized, as well, such as the CCU **102** being centered in height relative to the handlebars **122.** A visor or glare shield **128** partially encircling the CCU **102** may be used to help reduce glare on the CCU **102.**

The CCU **102** may include an electronic display on which a user interface or dashboard may be displayed to enable the user of the EVC **100** to interact with the CCU **102** and rent, control, and/or operate the ECV **100.** The user interface may display operational and non-operational information, as further described herein. The operational information may include speed of the ECV **100,** remaining battery power, and other ECV operational information. Non-operational information may include venue-specific mapping information, venue-specific user information, rental information, and so forth, as further described herein.

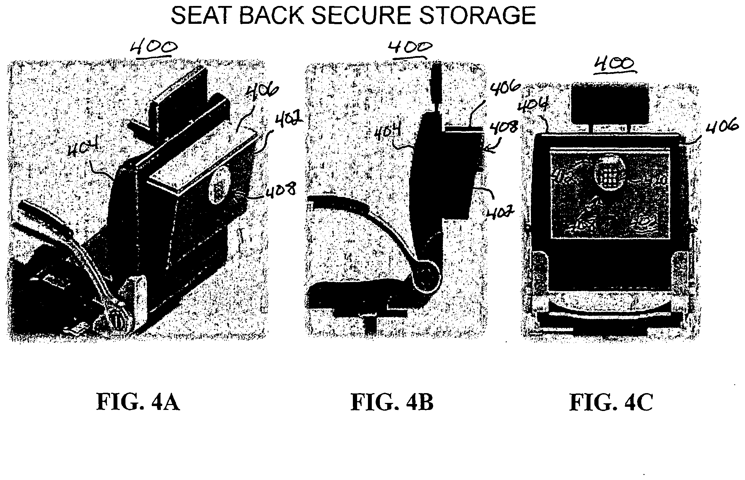

The backrest **118** may include one or more brackets **144** connected thereto, and to which various devices may be mounted. The brackets **144** may enable a basket **146** (e.g., metal mesh basket), as shown in **FIG. 1C****,** lockbox (see, for example, **FIGS. 4A-4C****),** holders, such as oxygen tank holder, cane holder, beverage holder, etc., umbrella holder, and/or any other holder or device that may be helpful to a user of the ECV **100** to be secured. Another storage bin **148** may be disposed beneath the seat **106,** and may be formed of any material, stiff or flexible, to enable a user to store items therein.

On a rear portion of the body **110** of the ECV **100,** lights **147** that indicate that the ECV is stopping or performing some other type of action to vehicles and people behind the ECV **100** are shown. In an embodiment, one or more sensors **149,** such as proximity sensors, may be positioned on the rear of the ECV **100.** A camera may also be positioned on the rear of the ECV **100,** thereby enabling a user to see behind the ECV **100** when backing up by viewing video images received from the rear camera on the CCU **102,** for example. **FIGS. 1C-1J** show alternative perspective and directional views of the ECV.

To charge the ECV **100,** a charging port **150** may be disposed on the tiller **124.** The charging port **150** may include electrical conduits that allows for a charger to connect thereto via a charger cable (not shown) having a reciprocal connector to connect with the charging port **150.** The conduits of the charging port **150** may be electrically connected to a rechargeable battery (not shown). Alternative embodiments and locations of the charging port **150** may be included on the ECV **100.** For example, rather than being positioned on the tiller **124,** a charging port may be positioned on the body **110.** Still yet, the ECV **100** may utilize wireless charging, such as inductive charging, where an inductive charging element may be placed below the ECV **100** to inductively charge a rechargeable battery via a corresponding inductive charging element.

An operator key bypass **152** may be provided to enable an operator to override control of the ECV **100** currently assigned to a user. The operator key bypass **152** may be accessed via a key, which causes control of the ECV **100** and CCU **102** to be overridden and given to an operator with the key. The key may be a conventional key or an electronic key that is coded to cause the ECV **100** and CCU **102** to provide access to some or all functions depending on the coding. For example, an operator may be an attendant who is checking on a battery level or user identifier to determine current status, or a technician who has to repair or otherwise service the ECV **100.**

An RFID and/or barcode reader **154** may be positioned beneath the CCU **102,** and may be configured to scan, image, and read a machine-readable indicia (e.g., barcode, QR code, RFID tag, etc.) from a variety of media. The reader **154** may be continuously ON, and ready to read a machine-readable indicia. The reader **154** may be in electrical communication with the CCU **102** to communicate data thereto. The reader **154** may receive and store text or commands associated with the machine-readable indicia for use thereby. For example, the machine-readable indicia may be a discount code, user identifier, turn-on command, or any other information or command that can be used for rental (e.g., discount to cost of rental), informational (e.g., address user by his or her name via the CCU), operational (e.g., re-verify user each time the user attempts to re-access the ECV), or other function (e.g., treasure hunt game piece).

The tiller **124** may be angled upright and towards the seat **106.** To change the angle, a switch **156** may be used to perform a power adjustment using a motor within the tiller **124.** The switch **156** may include a forward/backward rotate mechanism that allows for forward and back power adjustment of the tiller **124.** In an alternative embodiment, the tiller **124** may include a mechanical rotational element, such as a hinge (not shown), with fixed or variable settings. Still yet, the CCU **102** may support a user interface element that allows for the user to interact to set a rotation angle of the tiller **124.**

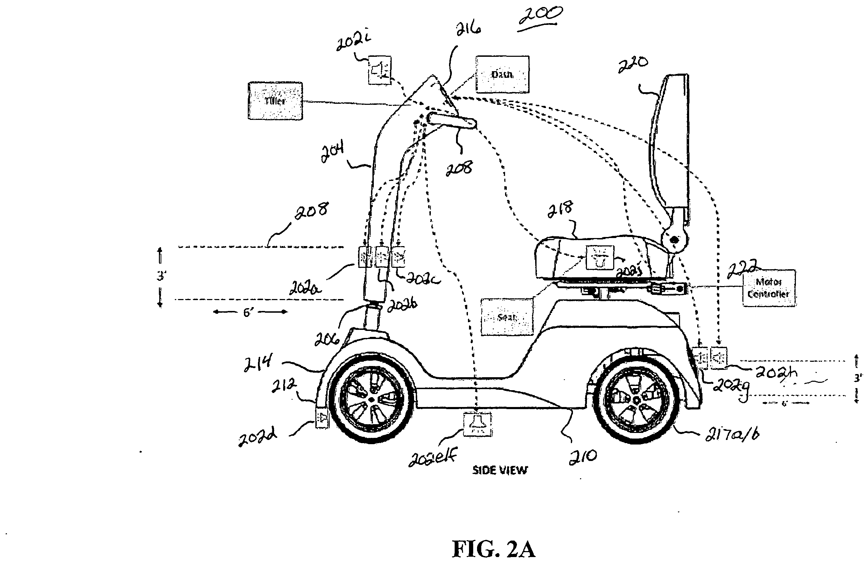

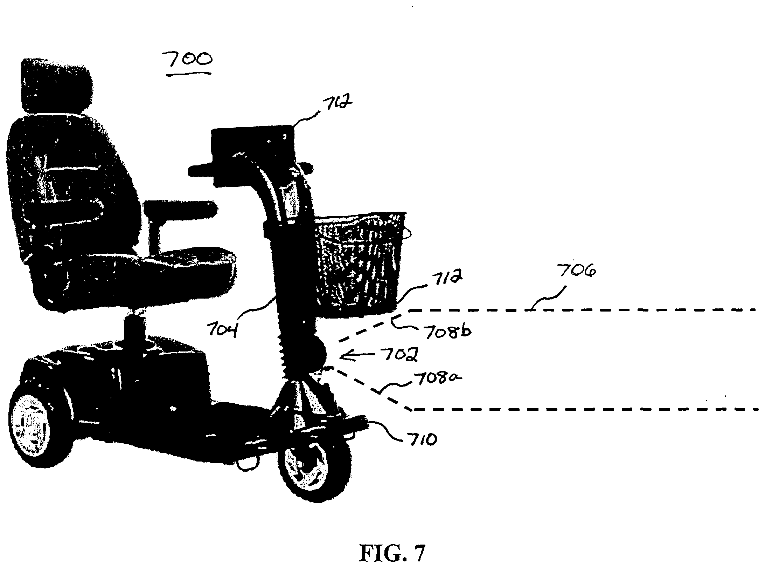

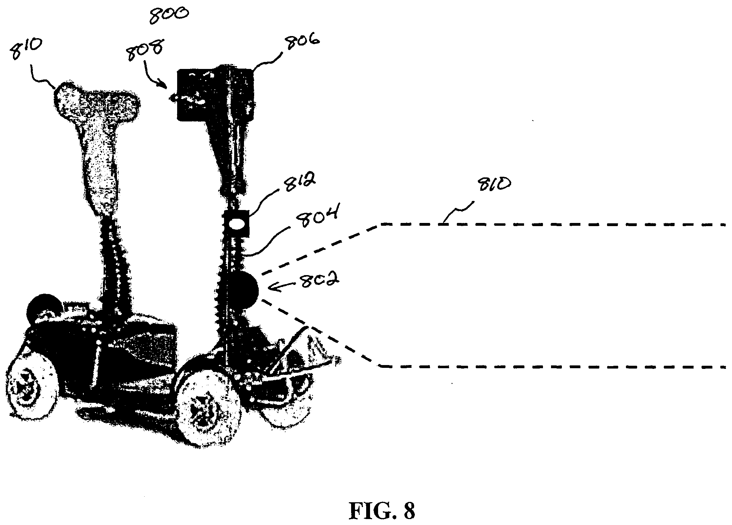

With regard to **FIGS. 2A-2D,** schematics showing an ECV **200** inclusive of sensors **202a-202j** (collectively **202)** positioned on the ECV used to sense objects in front of and around the ECV **200** and whether or not a user is sitting on the seat are shown. The sensors **202** include front sensors **202a-202c** positioned on a tiller **204** configured to rotate at a joint **206** by a user turning one or more handlebars **208.** The sensors **202a-202c** may be arranged to sense objects in front of the tiller **204** as a function of the angle of the tiller **204.** As previously described, if the tiller **204** is rotated, then the sensors **202a-202c,** which are mounted to a portion of the tiller **204** that rotates, sense objects positioned in front of the rotated tiller **204.** As shown, the sensors **202a-202c** are configured with a sensing pattern **208** that projects approximately 6-feet outward with a height of about 3-feet. The sensing pattern **208** may further have a shape that is unobstructed by a fender or other portion of a body **210** of the ECV **200,** as further shown in **FIGS. 7** and **8****.**

Sensor **202d,** which may include one or more sensors, disposed at a base portion **212** of a front fender **214** may be used to sense objects that are beneath the sensing pattern **208.** The sensor **202d** may be configured to sense objects or structures that are located within a certain distance of the ECV **200.** For example, the sensor **202d** may be configured to have a sense distance between about 3-feet to about 6-feet, where being about a distance is within a few inches, such as 3 inches.

The sense distances of the sensors **202a-202d** should be long enough that the ECV **200** is capable of stopping at a rate that does not cause discomfort to a user (e.g., does not cause their heads or bodies to snap forward) in the event of an automatic slowdown by a CCU **216** or other electronics. Sensors **202e/202f,** which are positioned at a center location on the left and right sides at a bottom portion of the body **210** of the ECV **200,** may be configured to sense objects to below and to the side of the ECV **200** to help prevent a foot of a pedestrian or object from being run over by either of the respective left and right rear wheels **217a/217b** of the ECV **200.** Sensors **202g** and **202h** are proximity sensors mounted to a rear portion of the body **210** to sense objects behind the ECV **200.** The sensors **202g** and **20h** may primarily be used to sense for objects behind the ECV **200** when the ECV **200** is moving backwards, and may have the same or different sense patterns as the sensors **202a-202c.**

In addition to the proximity sensors **202a-202h,** the ECV **200** may include user or operator sensors **202i** and **202j.** The sensor **202i** may be positioned on a top portion of the tiller **204** and faces a seat **218** or a backrest **220** that extends upwards from the seat **218.** The sensor **202i** may be used to sense that a user is positioned on the seat **218.** The sensor **202i** may generate a sense signal in response to determining that an object, such as a person, is located a distance that is less than the distance of the seat **218** or backrest **220.** A sensor **202j** may be a sensor that measures weight or force placed on the seat **218.** In an embodiment, the sensor **202j** measures weight or force, and a circuit or software program being executed by a circuit may determine that the weight on top of the seat **202j** is above a certain amount, such as 75 pounds, to confirm that the likelihood of a user sitting on the seat **218** is higher than a package or other object being placed on the seat **218.** A motor controller **222** may be used to control a motor of the ECV **200.** In an embodiment, a switch (not shown), which may be part of the motor controller **222,** may be configured to prevent the motor from operating or from causing the wheels **217a/217b** from rotating.

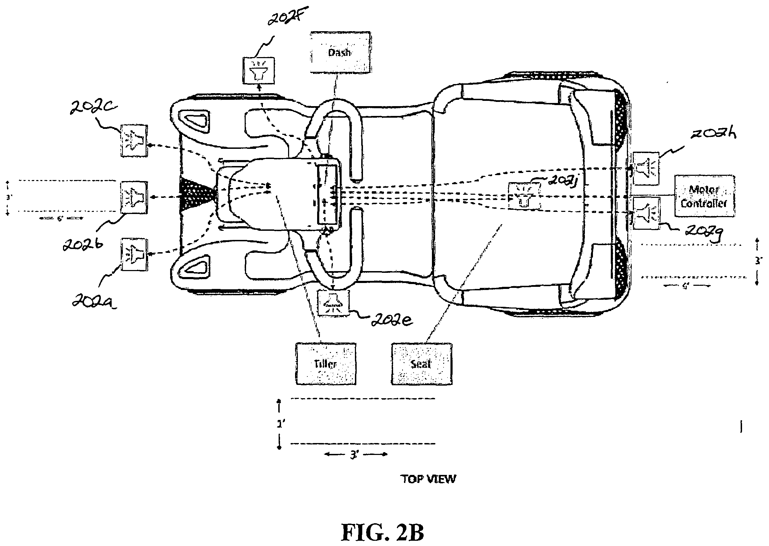

With regard to FIGS. **2B** and **2C,** top and side views of the ECV **200** are shown. The sensors **202** are shown to be in communication, either wired or wirelessly, in communication with the CCU **216,** which may be configured to receive and respond to sense signals received from any of the sensors **202.** As previously described, other circuit(s) (not shown) may be configured to receive and respond to sense signals from one or more of the sensors **202.** If other circuits are utilized, then the CCU **216** may further be configured to be in communication with the other circuits to interact with the other circuits in controlling the ECV **200** or receive and record operations performed by the other circuits.

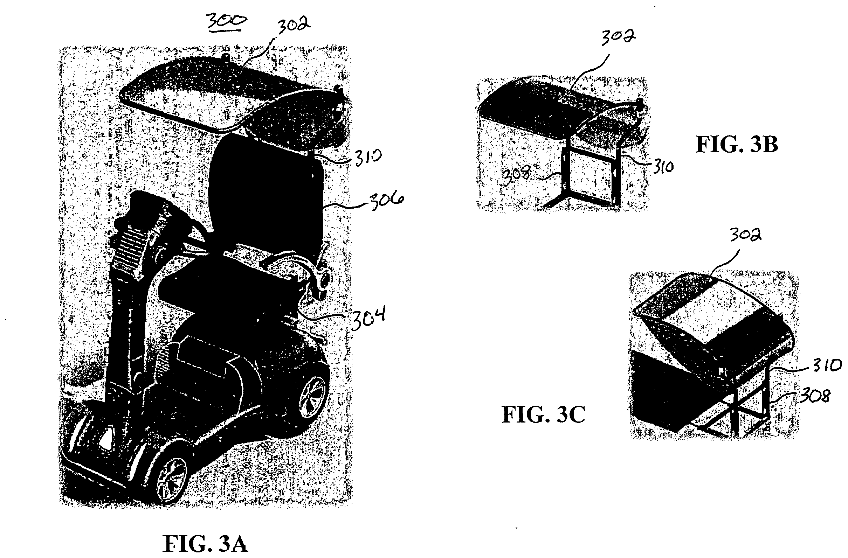

With regard to **FIG. 3A****,** an illustration of an illustrative ECV **300** configured with a canopy **302** that mounts to a seat **304,** backrest **306,** or frame members **308** with structure members **310** that may connect to and/or extend through the frame members **308.** The canopy **302** may be translucent, opaque, or otherwise configured to enable light or prevent light to pass therethrough. It should be understood that a wide range of configurations of the canopy **302** may be provided. In an embodiment, side members (not shown) that extend downwards or are capable of moving up and down or back to front to allow a user to further protect him or herself from sun and/or rain.

With regard to **FIGS. 4A-4C****,** illustrations of a seat **400** of an ECV including an illustrative lockbox **402** that may be attached to a backrest **404** of the seat **400** are shown. The lockbox **402** may be mounted to one or more mounting brackets (not shown) attached to the backrest **404.** In an embodiment, the lockbox 4**02** is formed of solid, rigid material (e.g., metal). Users of the ECV may store and secure items in the lockbox **402.** In an embodiment, a rotatable or moveable cover **406** may be provided to enclose items in the lockbox **402.** A user interface **408** may be mounted to the lockbox **402** that enables a user to lock and unlock the lockbox **402.** In an embodiment, the user interface **408** is mounted to a wall **410** of the lockbox **402.** In an alternative embodiment, the user interface **408** may be mounted to the cover **406.**

The user interface **408** may include electronics that enables a user to lock and unlock a lock mechanism (not shown) that engages and disengages to secure and release the cover **406.** In the embodiment shown, the user interface **408** includes a keypad **410** along with a small electronic display **412** (e.g., liquid crystal display (LCD)) that allows for the user to set a personal identification number (PIN), such as a 4-digit PIN, to lock and unlock the lockbox **402.** It should be understood that a wide range of user interfaces, displays, and locking mechanisms may be utilized. For example, the user interface **408** may include a near-field communications (NFC) reader, radio frequency identifier (RFID) reader, or otherwise that enables the reading of a tag or other ID mechanism that may be on a wristband or other object, which, if correct, unlocks and locks the lockbox **402.** In an alternative embodiment, the lockbox **402** may be in communication with a CCU of the ECV to enable a user to lock and unlock the lockbox **402** therefrom (e.g., via a soft-keypad either within an unlocked state of the CCU or locked state of the CCU).

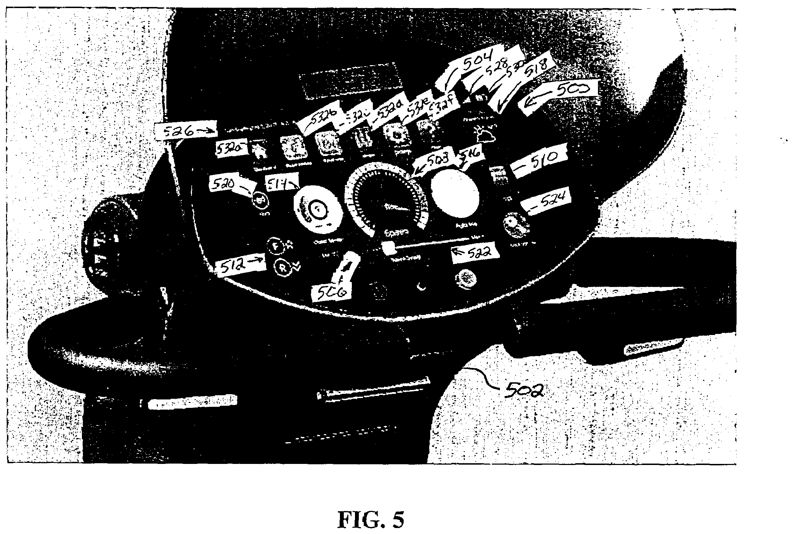

With regard to **FIG. 5****,** an illustration of an illustrative CCU **500** disposed on top of a tiller **502** of an ECV, such as shown in **FIG. 1A****,** is shown. The CCU **500** may include an electronic display on which a user interface **506** is displayed. The user interface **506** is shown to include a number of dashboard-type features, including a speedometer **508,** fuel gauge **510,** in this case a battery charge level, and forward/reverse indicator **512.** Other information elements, including an object sensor meter **514,** digital map **516,** weather information **518,** horn **520,** speed control limiter **522,** and lock vehicle soft-button **524.** Current time and date **526** may also be displayed. Because the CCU **500** may be wirelessly connected to a communications network, a connection strength indicator **528** and battery level **530** may also be displayed. In an embodiment, a compass that points to attractions (e.g., rides) or locations (e.g., entrance gate, front door, etc.) on the outside of the compass may be displayed.

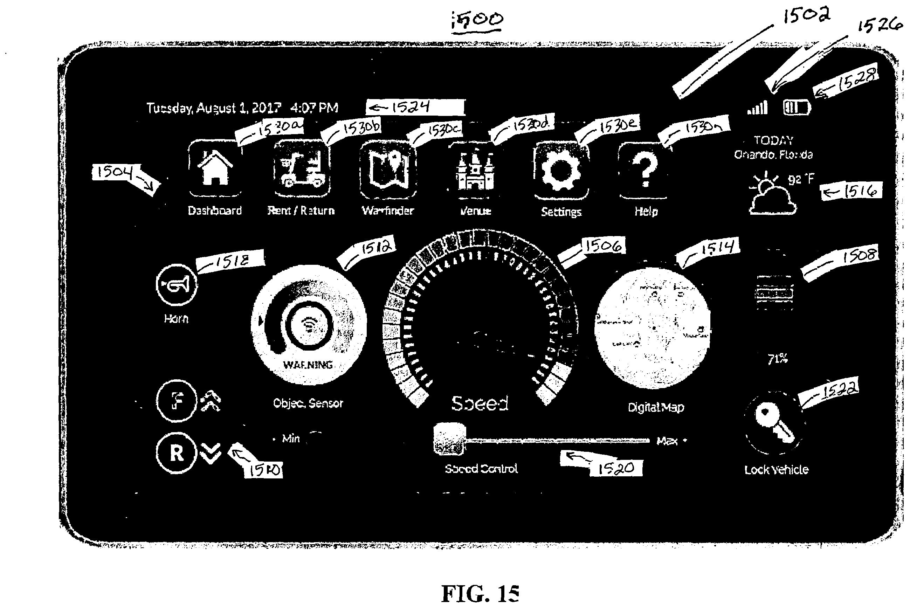

The CCU **500** is meant to provide for both ECV control and information for a user. As such, the CCU **500** may be configured to execute a variety of applications or apps to support ECV and information. The apps may be accessed via app icons **532a-532n** (collectively **532)** by a user to execute the corresponding app. The apps may include Dashboard **532a,** Rent/Return **532b,** Wayfinder **532c,** Venue **532d,** Settings **532e,** and Help **532n.** It should be understood that additional or alternative apps may be executed by the CCU **500** and be available for execution thereby. Various aspects of the apps are further described herein with regard to **FIG. 15****.**

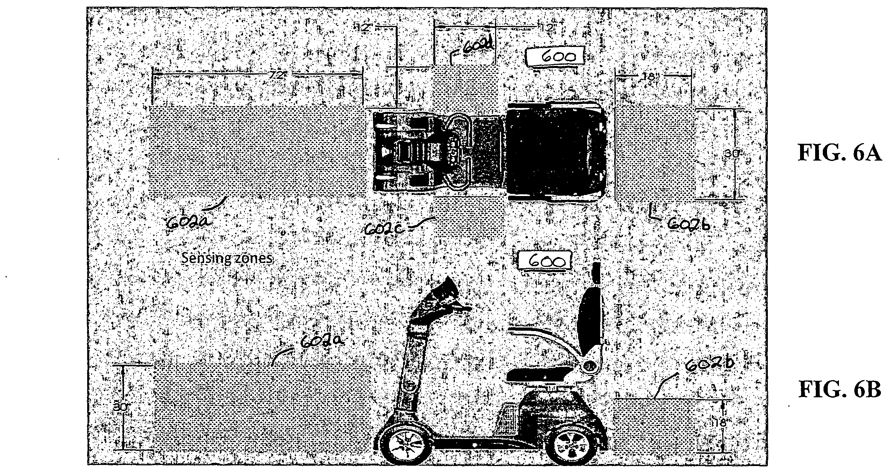

With regard to **FIG. 6A** and **6B****,** illustrations of an illustrative ECV **602** along with sensor regions or zones **602a-602d** (collectively **602)** are shown. The ECV **600** is shown from a top view **(****FIG. 6A****)** and a left-side view **(****FIG. 6B****)** so that the sensing zones **602** can be seen relative to the ECV **600.** Sensing zone **602a** is shown to have a length of 6-feet (72 inches), a width of 30-inches, and height of 30-inches. Sensing zone **602b** is shown to have a length of 18-inches, width of 30-inches, and height of 18-inches. Sensing zones **602c** and **602d** are shown to have lengths of 12-inches and width of 12-inches. The height of sensing zones **602c** and **602d** may extend from the sensors downwards to or toward the surface on which the ECV **600** resides. It should be understood that alternative dimensions of the sensing zones **602** may be utilized. Although sensing zone **602a** is shown to extend directly in front of the ECV **600,** it should be understood that the sensing zone **602a** is variable in direction as a function of the angle at which the tiller on which sensors are mounted.

The sensing zones **602** are generally defined by the types of sensors that are used for sensing objects within the sensing zones **602.** In addition, the sensing zones **602** may be established by gains in electronics to which the sensors are electrically connected and/or power used to drive the sensors. Moreover, the sensing zones **602** may be dependent, at least in part, upon temperature of the sensors, where the dimensions of the sensing zones **602** may vary based on the temperature of the sensors.

It should be understood that the sensing zones **602** are illustrative, and that other sensing zones may be utilized. Moreover, the sensing zones **602** may be dynamic in that they may be manually or automatically varied depending upon environments in which the ECV is operating. For example, if the ECV **600** is operating within a crowded space, then the sensing zones **602** may be adjusted to be shorter, and if the ECV **600** is operating within a uncrowded space, then the sensing zone may be adjusted to be larger. Moreover, the sensing zones **602** may be adjusted based on speed of the ECV **600,** such that if the ECV **600** is moving fast, then the sensing zone **602,** at least the front sensing zone **602a,** may be extended, and if the ECV **600** is moving slowly, then the sensing zones **602,** at least the front sensing zone **602a,** may be shortened. Alternatively, the sensing zones **602** may be fixed, and software may be utilized to adjust sensed signals.

As previously described, the sensing zones **602** are established by proximity sensors. Alternatively, different types of sensors may be utilized, such as optical sensors. For example, three-dimensional (3D) image sensor devices may be utilized to measure distance of objects from the ECV **600,** and the images may be used for other purposes, as well. Alternative types of sensors for detecting range may be utilized. The sensors in the front, back, left, and right may be the same or different types as the ranges and types of objects being sensed may be different. Although not shown, a sensor at the front of the bumper facing diagonally downwards to sense objects, such as curbs or otherwise, may be included, and be the same or similar to the side sensors.

With regard to **FIG. 7****,** an illustration of an illustrative ECV **700** showing a sensor **702** mounted on a tiller **704** of the ECV **700** along with a sensing pattern **706** created by the sensor **702** is shown. The sensing region **706** is shown to include angled regions **708a** and **708b** that extend above and below a front member **710** and basket **712** to avoid having the sensing region **706** being obstructed. Sensors that provide for such a shape of the sensing region **706** may be utilized. A CCU **712** may be in electrical communication with the sensor(s) **702** so as to receive and respond to sense signals from the sensor(s) **702.** Although not specifically shown, it should be understood that additional sensors for the sides and rear of the ECV **700** may also be included. Camera(s) (not shown) may also be included on the ECV **700,** and be in communication with the CCU **712** for capturing and processing images.

With regard to **FIG. 8****,** an illustration of an illustrative ECV **800** that provides for standing by a user, and may include one or more sensors **802** positioned on a tiller **804** of the ECV **800** along with a CCU **806** disposed on a steering mechanism **808** of the tiller **802** to enable the user to view the ECV **800** during operation is shown. The sensors **802** may produce a sensing region **810.** The ECV **800** may include a vertical rest member **812** against which a user may lean against during operation. The vertical rest member **812** may be adjustable upwards and downwards to accommodate different heights of users. As shown, a camera **814** may also be mounted to the tiller **804** to capture images and video for use by the CCU **806.** The CCU **806** may be configured and operate in the same manner or similar manner as the CCU **100** of **FIG. 1A****.** For example, rather than sensing weight on a seat, weight on a floor or light blocked from a sensor mounted to the floor may be sensed to determine whether the user is on the ECV **800.**

With regard to **FIG. 9****,** a block diagram of illustrative electronics **900** used for controlling and operating an ECV and CCU is shown. The electronics **900** may include a processor **902,** which may include one or more computing devices, such as a general processor (e.g., Raspberry PI), image processor, digital signal processor, etc.) and electronic display **904** (e.g., 5-inch or 7-inch touchscreen display). In an embodiment, the processor **902** and electronic display may form, at least in part, the CCU with which a user may use to rent and control the ECV. A wireless communications device **906** (e.g., WiFi^{®} transceiver) and geolocation device **908** (e.g., GPS receiver, triangulation receiver, etc.) may be included to support various data communications and application services, such as location tracking, geofencing (e.g., prevent the ECV from exiting a venue or entering restricted areas of a venue). A number of sensors, including proximity sensor(s) **910** and seat switch **912,** may be included to assist with managing and controlling the ECV and CCU, as further described herein. In an embodiment, one or more video cameras **914** may be included to capture images, such as video images, for display on the electronic display **904,** and for supporting other applications, such as an ECV crash recordation app in which video captured by a camera is stored for later review to determine how the incident occurred. Each of the electronics may be in communication with the processor **902** via a wired or wireless connection directly or indirectly through other networking electronics (e.g., USB, HDMI, Bluetooth^{®}, or other communications protocols).

As shown, the proximity sensor(s) may be configured to sense proximity of objects, such as people (e.g., adults, children), structures (e.g., curbs, walls, poles, etc.), or moveable objects (e.g., other ECVs, boxes, bags, etc.), and generate sense signals **916** that are indicative of an object being sensed. In an embodiment, the sense signals **916** are analog, and the processor may convert the signals **916** to digital for processing thereby. In an alternative embodiment, the signals **916** may be digital. The signals **916** may indicate (i) angle of an object based on the angle of the sensor relative to the ECV (e.g., each of three sensors mounted on the tiller may output a sense signal level, which may be used to determine angle of an object relative to the tiller) and (ii) distance of an object based on amplitude of the signal.

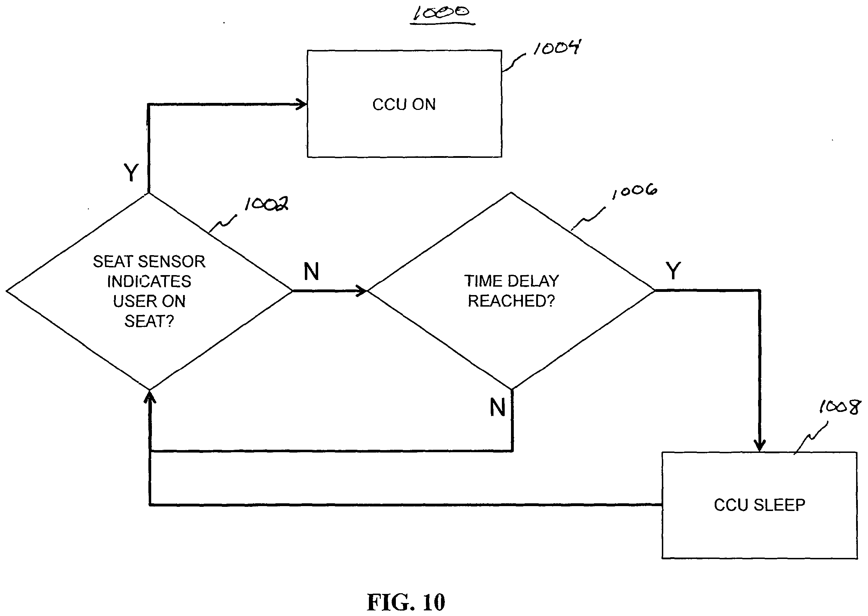

With regard to **FIG. 10****,** a flow diagram of an illustrative CCU control process **1000** that is used to manage battery of the CCU is shown. The process **1000** may start by the CCU being in an OFF state, and at step **1002,** a determination as to whether a seat sensor indicates that the user is sitting on the seat of the ECV. If the ECV is a stand-up ECV, then the sensor may sense whether the user is pressing against a vertical seat rest, for example. If so, then the process **1000** may turn or maintain the CCU to an ON state at step **1004.** Once ON, the user may utilize the CCU for functional and informational purposes when operating the ECV. The CCU may be maintained ON so long as the user interacts with the CCU directly or continues to operate the ECV with the user sitting on the seat. If at step **1002** it is determined that the user is no longer sitting on the seat, then the process **1000** may continue at step **1006,** where a determination may be made as to whether a time delay has been reached. The time delay may have a default, such as 5 minutes, and/or may be set on the CCU (e.g., ranging from 2 minutes to 15 minutes). The time delay allows for the user to be able to get off of the ECV to talk to someone, to get some food, to go on a ride, and so on. If the time limit has not been reached, then the process **1000** may return to step **1002** to continue monitoring the seat sensor. If the time limit has been reached, then the process may continue at step **1008,** where the CCU may go into a sleep state. The sleep mode may cause the display to be turned OFF and other non-critical functions, such as wireless communications, may be turned OFF, as well. The process **1000** may return to step **1002** to continue monitoring for the user to sit on the seat, where upon the CCU may be turned back to an ON state at step **1004.**

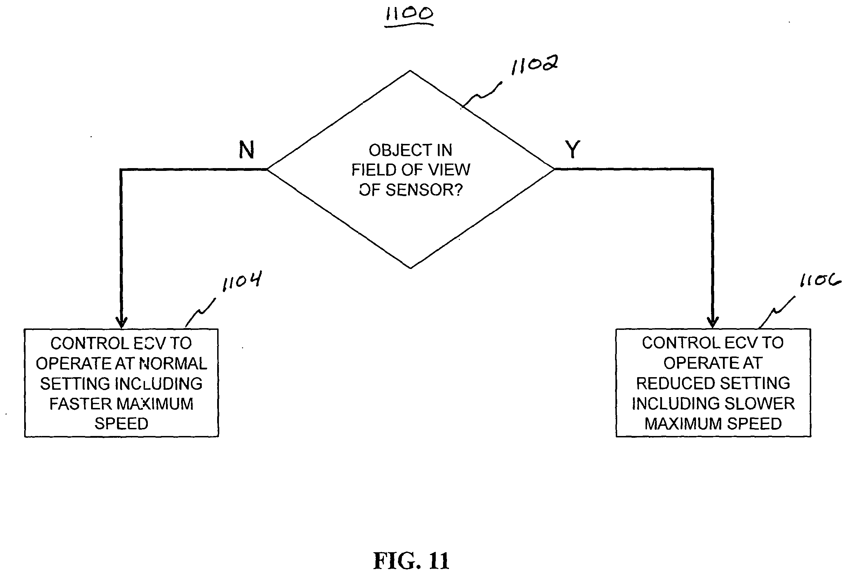

With regard to **FIG. 11****,** a flow diagram of an illustrative ECV control process **1100** for the CCU to control operation of the ECV is shown. The process **1100** may start at step **1102,** where a determination as to whether an object is in a field-of-view (FOV) of any of the sensors may be made. The determination may be intelligent and include a determination as to whether the object in the FOV of a sensor is in the FOV of a sensor that is in the direction or intended direction of travel of the ECV. For example, if an object is in the FOV of a front or side sensor and the ECV is moving or preparing to move forward, then the determination as to whether the object in the field-of-view of the sensor at step **1102** is YES, otherwise, the determination is NO. Alternatively, if an object is determined to be in view of a front sensor and the ECV is in reverse, then the determination at step **1102** is NO. If the determination at step **1102** is NO, then the process may continue at step **1104,** where control of the ECV may be operated at normal settings, such as the speed of the ECV may be at a fast maximum speed (e.g., 10 mph). Alternatively, if the determination at step **1102** is YES, then the process may continue at step **1106,** where control of the ECV may operate at normal settings, such as the speed of the ECV may be at a slow or reduced maximum speed (e.g., 3 or 5 mph). By reducing the maximum speed of the ECV, there is a more likely chance that the ECV will hit and injure a pedestrian or object.

The reduction of speed at step **1106** may be implemented in a number of ways. For example, rather than instantaneously dropping the maximum speed, the maximum speed may be reduced in a sloped manner (e.g., linearly ramped downward from the top maximum speed to the lower maximum speed), thereby preventing the ECV from slowing too fast and causing discomfort to the user or otherwise. Similarly, if the maximum speed is increased from the lower speed, then the transition may be sloped, so as to prevent the ECV from speeding up too fast and avoiding causing discomfort to the user or otherwise. The limitation of the maximum speed means that if the user is applying a throttle at a maximum level that the speed of the ECV will be limited to the maximum speed established and controlled by the CCU. The CCU, in enforcing the maximum speed limit, may apply a control signal to a motor of the ECV that causes the ECV to travel no faster than the maximum speed limit. Hence, if the maximum speed is transitioning from fast to slow, then if the throttle is positioned to go maximum speed, then the CCU will transition the ECV from the fast maximum speed to the slow maximum speed at the transition slope. In an embodiment, the CCU may be configured to not only transition the maximum speed from fast to slow, but also stop the ECV in response to sensing the object at a near distance, especially close to the front of the ECV or directly in front of rear tires, by causing the motor to slow even more and/or apply automatic brakes if a determination is made that the object will be hit by the ECV if the user does not take evasive action by either turning the steering mechanism (e.g., rotating the tiller) or applying the brake.

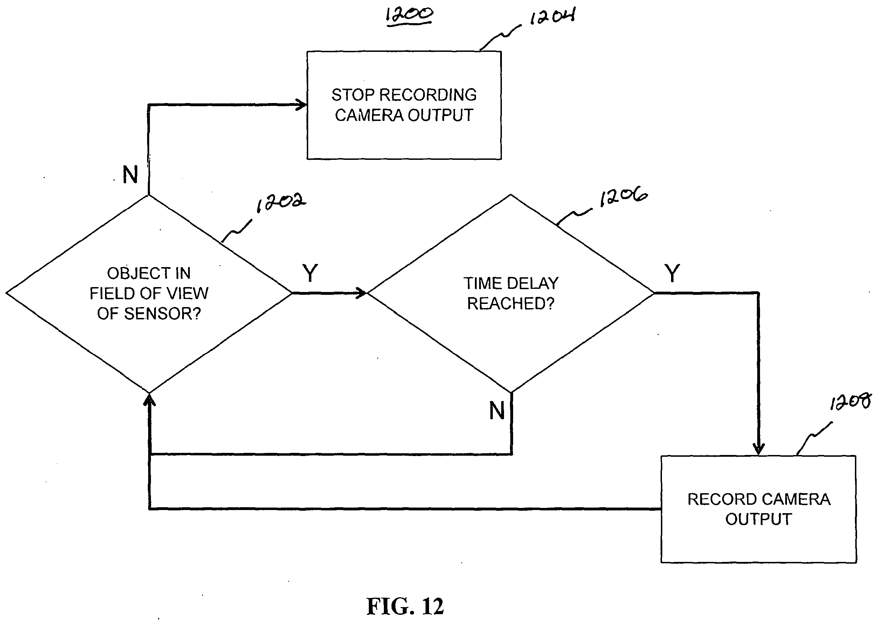

With regard to **FIG. 12****,** a flow diagram of an illustrative collision recording process **1200** is shown. The process **1200** may start at step **1202,** where a determination as to whether an object is in a field-of-view of a sensor of an ECV may be made. If it is determined that no object is in a field-of-view of one or more of the ECV sensors, then the process may proceed to step **1204,** where recording of video images from a camera on the ECV may be stopped, not started, or not saved. That is, if no collision is determined to be impending, then video images may not be recorded as the potential for a collision is minimal based on not sensing any objects by the ECV sensor(s). Alternatively, if a determination is made that there is an object in a field-of-view of one or more of the sensors, then the process **1200** may proceed to step **1206.**

At step **1206,** a determination may be made as to whether a time delay has been reached. The time delay may be used to determine whether an object remains in the field-of-view of a sensor. If the time delay has been reached, then video being captured by a camera may be recorded to capture video of an object that has the potential of being struck by the ECV. If the time delay is determined not to have been reached, then the process **1200** may return to step **1202.** The use of the process **1200** to capture video of objects that may be struck may be used for safety and liability purposes. It should be understood that the process **1200** is illustrative, and that alternative processes for determining when to capture and not capture video for use in collision review may be utilized. For example, video capture may be performed any time that an object is determined to be in the field-of-view of one of the sensors of the ECV, especially the front sensor(s) of the ECV, and if a collision is determined not to have occurred as a result of the object no longer being in the field-of-view of the sensor(s), then the recording of the video content, which may also include audio, may be deleted, thereby preserving memory. The process **1200** may operate as a "black box" to enable investigators, operators, and users to view collisions that occur to determine whether or not the user was at fault, pedestrian was at fault, and/or equipment of the ECV was at fault, for example.

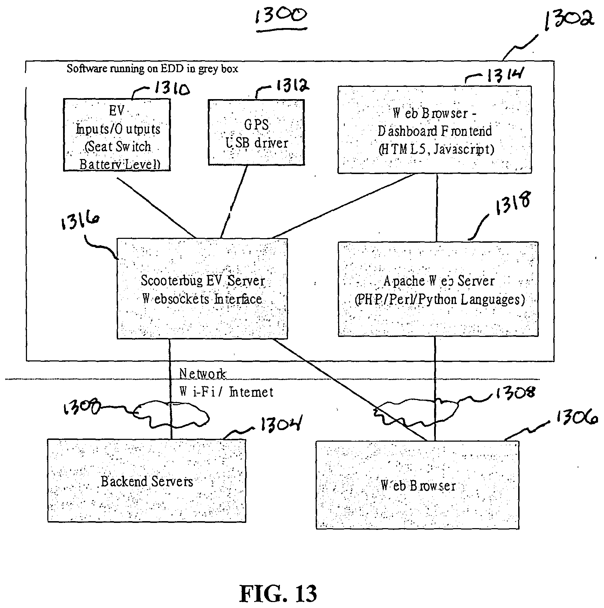

With regard to **FIG. 13****,** an illustration of an illustrative block diagram of a system **1300** including software **1302** configured to be executed by a CCU of an ECV, and further configured to communicate with server(s) **1304** and web browser **1306** through communication network(s) **1308** is shown. The software **1302** may include an electric vehicle socket **1310** for handling inputs/outputs from sensors so as to monitor the sensors, battery voltage level, and/or other devices operating on the ECV. A GPS USB driver **1312** may be configured to collect GPS data from a GPS device and communicate that device to an a backend server **1304.** A web browser - dashboard front-end software module **1314** may be configured to provide a user interface for a user to operate the CCU. The web browser - dashboard front-end may be written in any language, such as HTMLS, Javascript, or otherwise.

To communicate information collected by the software components or modules **1310, 1312,** and/or **1314,** a CCU server websockets interface **1316** may operate to interface and communicate data over the network **1308.** The network **1308** may be a Wi-Fi network and/or any other local or long-distance communications network that supports communication of data over the Internet or other communications network. In an embodiment, a web server, such as Apache web server, that supports various computer languages, such as PHP, Perl, Python, or other language that may be executed on the CCU may be executed by the CCU.

With regard to **FIG. 14****,** an illustration of an illustrative network environment **1400** in which electric convenience vehicles **1402a-1402n** (collectively **1402)** are operating is shown. The network environment **1400** may include a communications network **1404** in which network servers **1406a-1406n** (collectively **1406)** and/or venue server **1408** may be used for communications of control signals and/or content with the ECBs **1402.** The network servers **1406** may be used for providing certain types of services, such as location-based services (e.g., mapping services within a larger venue, such as an amusement park or hospital complex).

The venue server **1408** may be utilized for providing venue-specific informational services, such as providing venue-centric directional information (e.g., mapping directions within an amusement park, out-of-bounds messages if the ECV is close to being in restricted or off-premises locations, etc.), video content, interactive content (e.g., games, trivia, maps, etc.), current attractions listing, notices, entertainment listing, venue-specific gaming content, broadcast messages (e.g., emergency messages, weather messages, event messages, closing time, etc.) or other venue-specific information that may be interesting to users of the ECVs **1402.** As shown, data **1410a** may be communicated between an ECV **1402a** and network server **1406a,** and data **1410n** may be communicated between ECV **1402n** and venue server **1408** via the network **1404.** In addition, data **1412** may be communicated between and among any of the ECVs **1402.** The data that is shared between the ECVs **1402** may include various types of information that may be or may not be accessible to users of the ECVs **1402** using the CCUs to provide control of the ECVs **1402** and provide information to users of the ECVs **1402.** In an embodiment, the information may be venue-specific information, such as a cartoon character who operates as a guide or provide venue-centric information. In an embodiment, a video overlay over a map may be used to display the cartoon character continuously or intermittently.

With regard to **FIG. 15****,** an illustration of an illustrative CCU **1500** operating on an ECV, such as shown in **FIG. 1A****,** is shown. As with **FIG. 5****,** the CCU **1500** may include an electronic display **1502** on which a user interface **1504** is displayed. The user interface **1504** includes the same dashboard-type features as **FIG. 5****,** including a speedometer **1506,** fuel gauge **1508,** in this case a battery charge level, and forward/reverse indicator **1510** to indicate a throttle position to a user. Other information elements, including an object sensor meter **1512,** digital map **1514,** weather information **1516,** horn **1518,** speed control limiter **1520,** and lock vehicle soft-button **1522.** Current time and date **1524** may also be displayed. Because the CCU **1500** may be wirelessly connected to a communications network, a connection strength indicator **1526** and battery level **1528** may also be displayed.

The CCU **1500** is meant to provide for both ECV control and information for a user. As such, the CCU **1500** may be configured to execute a variety of applications or apps to support ECV and information. The apps may be accessed via app icons **1530a-530n** (collectively **1530)** by a user to execute the corresponding app. The apps may include Dashboard **1530a,** Rent/Return **1530b,** Wayfinder **1530c,** Venue **1530d,** Settings **1530e,** and Help **1530n.** It should be understood that additional or alternative apps may be executed by the CCU **1500** and be available for execution thereby. Various aspects of the apps are further described herein.

A settings app **1530e** may provide for control of language, volume, brightness of the CCU. Also available may be an administrator access using an administrator keycode to access various information and data, such as control of the ECV, inventory availability, etc. Maintenance of the CCU and ECV may also be available by using an administrator or maintenance keycode to provide links to vehicle data and database on the ECV or located on an ECV remote database.

The Dashboard app **1530n** operates to display ECV operational information, as shown in the user interface **1504,** including the speedometer **1504,** object sensor meter **1512,** digital map **1514,** fuel gauge **1508,** and forward/reverse indicator. It should be understood that additional and/or alternative elements and representations of the elements may be utilized. For example, rather than using dials, bars, digits, or other graphical representations may be utilized to represent speed, levels, distances, and so on.

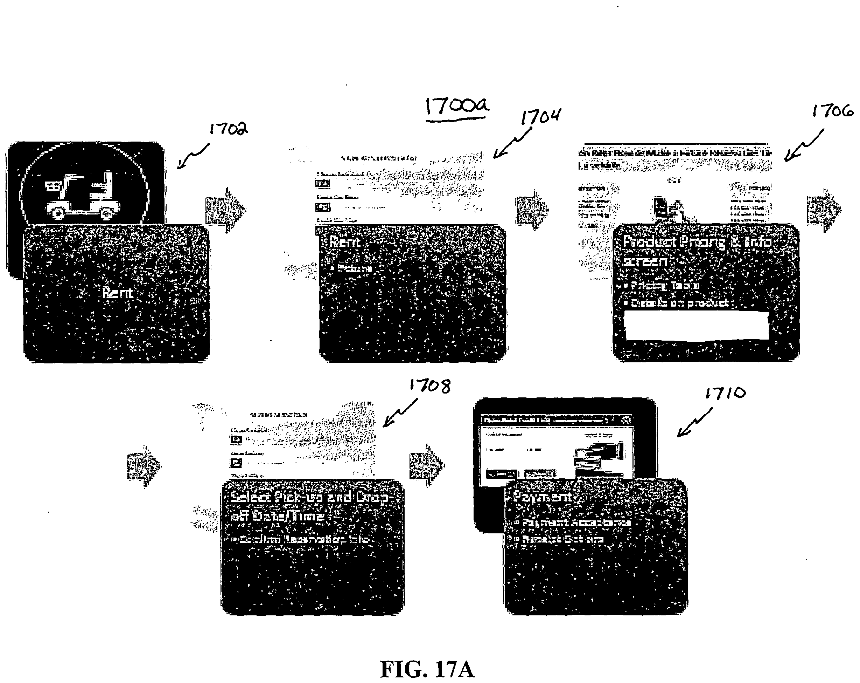

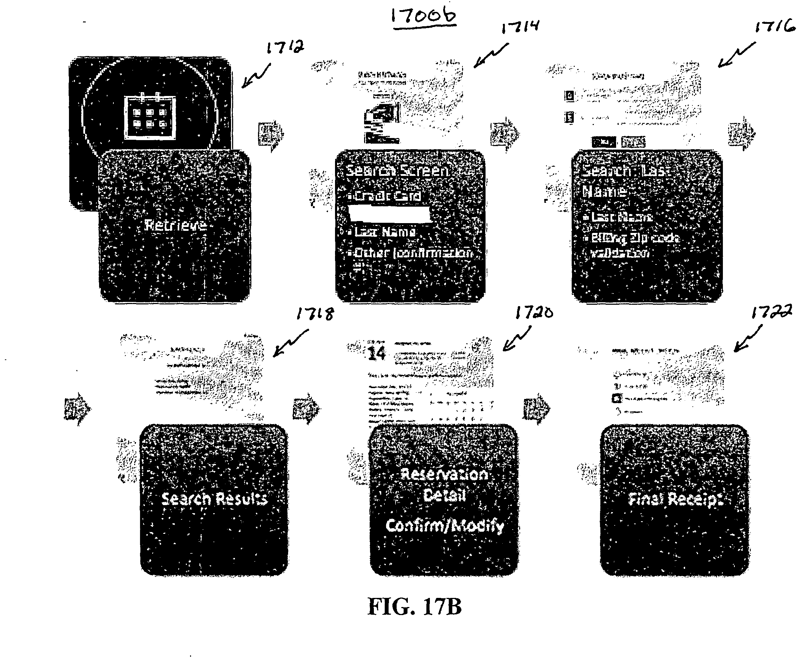

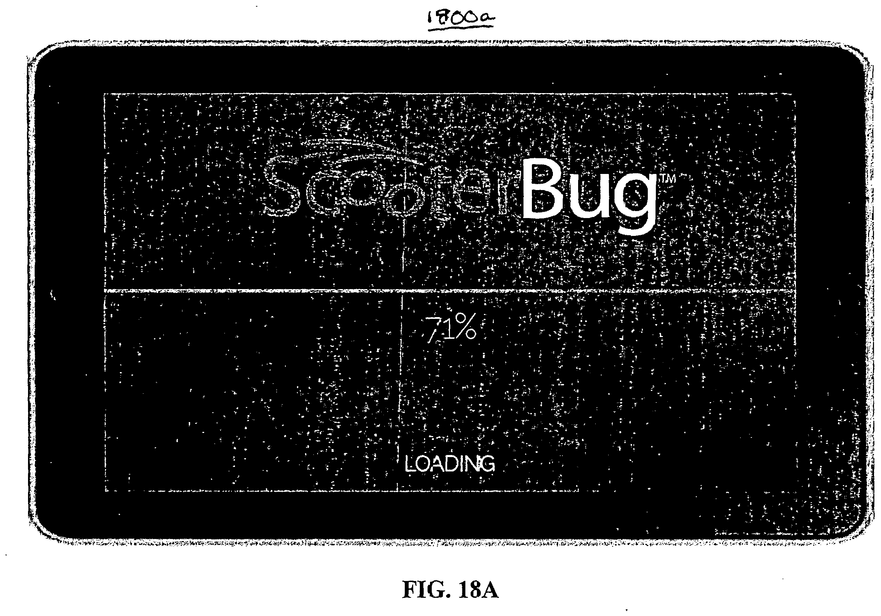

Selection of the Rent/Return app **1530b** cause the user interface **1504** to change to user interface(s) that allow for a user to initiate or complete a rental process directly via the CCU. By allowing for rental directly from the CCU, users do not have to rent via another device, such as a mobile telephone, kiosk, or otherwise. A process and user interface screens of the Rent/Return app **1530b** are shown in further detail with regard to **FIGS. 17A-17C** and **18A-18G.**

The Wayfinder app **1530c** may provide for venue-specific mapping directions and information on a map of a venue. The Wayfinder app **1530c** may utilize geolocation data to display current location of a user on top of a venue layout to assist a user with directions. The app **1530c** may also provide for audio directions for the user, which may be played via a speaker or earphones if the user is using earphones to listed to audio played via the CCU for audible directions or other content. The Wayfinder app **1530c** may further provide for searching for locations, such as restrooms, specific food type restaurants, specific rides, or otherwise, if in an amusement park. Other types of information may be provided for different venues. For example, a tour guide process in which location tracking and audio/visual content may be delivered to the CCU as the user drives his or her ECV at the venue.

The Venue app **1530d** may provide information associated with the venue or operator of the venue, such as providing a link to a website of the venue, specific visitor/guest functional tools, or otherwise. In an embodiment, available content, such as video entertainment, such as short features, tour information, movies, or audio (e.g., music, announcements) may be selectably downloaded and watched and/or listened to by a user of the CCU.

The Help app **1530n** may provide users with additional "How To's" along with video tutorials, including instructions and illustrations. Direct live, audio-visual assistance may also be available to the user via the Help app **1530n.**

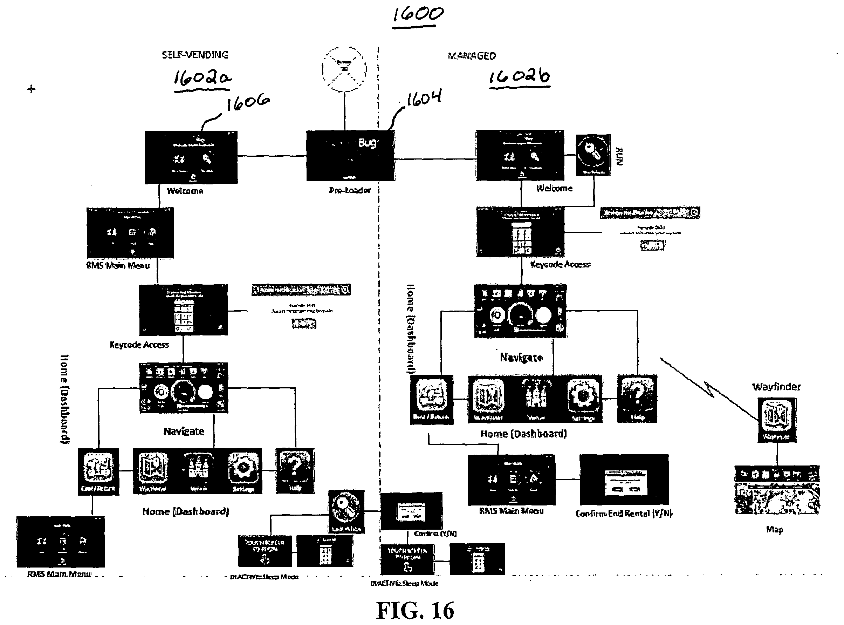

With regard to **FIG. 16****,** a hierarchy of screenshots **1600** that represent software operation of a CCU is shown. The hierarchy **1600** includes two possible CCU engagement options, including a self-vending process **1602a** and a managed process **1602b.** Each of the different engagement options may provide for the same or similar functionality, but the self-vending option may provide user interface screens that enable the user to rent the ECV via the CCU. The different modes of operation may depend on how different venues want to operate the ECVs and types of uses of the ECVs. For example, if the ECVs are to be used as a utility vehicle in a hospital, use of the ECVs by patients or visitors may be free or otherwise accommodated for by the hospital.

With regard to **FIGS. 17A-17C****,** a sequence of an illustrative process **1700a-1700c** (collectively **1700)** that enables a user to rent and access an ECV is shown. The process **1700** may start at step **1702,** where a user may select to rent an ECV. At step **1704,** a new reservation request may be made, which may lead to displaying a product and pricing listing at step **1706.** The product and pricing information may include one or more ECV products and pricing for rentals of the respective ECV products. The ECV products may include different options, such as sitting or standing, basket, lockbox, or other options of ECV configurations. The reservation request may include immediate rental or establishing a future rental date and time to pick up and drop off the ECV at step **1708.** At step **1710,** payment information may be submitted and approved for rental of the ECV.

The process **1700** may continue at step **1712,** where the user may select to retrieve a previously rented ECV or retrieve rental time information, such as a future rental that the user request to rent the ECV. In an embodiment, if the user made a previous online reservation of an ECV, either a particular ECV may be reserved for the user or the user may be able to select an available ECV and enter a reservation number or user ID to initiate a rental period for the assigned or selected ECV. At step **1714,** a search screen may be displayed, where the search screen may include a credit card number, last name, order number or confirmation number, or otherwise. If the user selects to search by his or her last name, the user may enter his or her last name along with a billing ZIP Code for validation. Alternative search imports may be utilized to locate an order associate with a user, as well.

At step **1718,** search results may be displayed. The search results may include date and time of the rental, which may be displayed at step **1720.** Reservation details, such as ECV type, identifier number of the ECV, or otherwise may also be displayed. In addition, step **1720** may enable the user to confirm and modify a reservation of the ECV. At step **1722,** a final receipt may be provided to the user for having confirmed payment for rental at a present or future time.

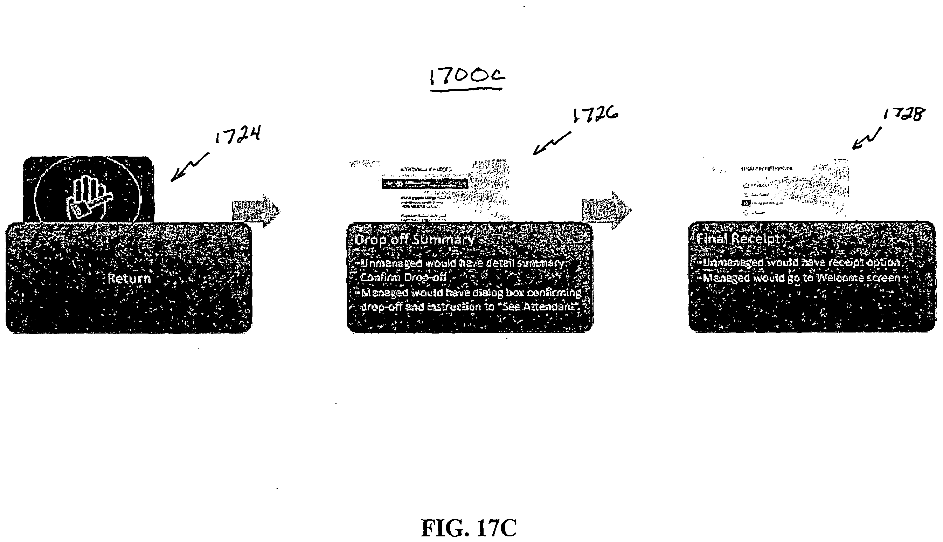

With regard to **FIG. 17C****,** at step **1724,** a user may select to return the ECV. In response, as step **1726,** a drop-off summary may be displayed on the CCU for the user. If the drop-off is performed in an unmanaged environment, then a detailed summary may be provided along with a confirmation of the drop-off. In a managed environment, the ECVs have managed rental and payment services with an attendant, and a dialog box confirming drop-off with an instruction to see an attendant may be provided. At step 1728, a final receipt may be provided to the user. The final receipt may be emailed, printed by or remotely from the ECV, or otherwise communicated to the user, if the user so desires. After final receipt is provided, the CCU may return to an initial welcome screen so that the ECV may be available for another user to rent or use.

With regard to FIGS. **18A-18G****,** screen shots of an illustrative user interface of a CCU that supports rental and usage of an ECV are shown. In **FIG. 18A****,** an illustrative user interface **1800a** is a illustrative loading screen that indicates to an operator that the CCU software is loading into memory and a processor of the CCU. As shown, as the CCU software is loading, a percentage of the amount complete, in this case 71%, may be shown to provide an operator with a status of the software loading process.

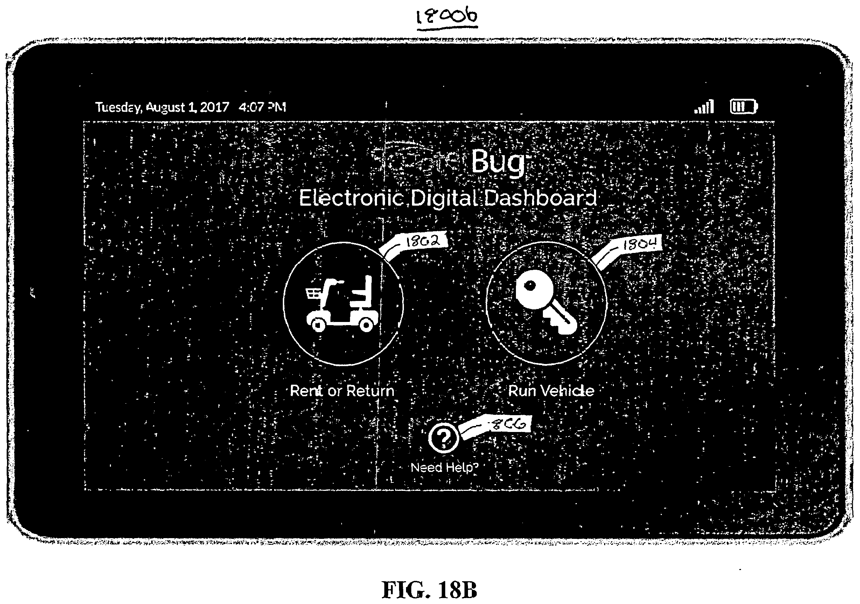

With regard to **FIG. 18B****,** an illustrative user interface **1800b** showing two options for the ECV to be operates are shown. A first option is a Rent or Return option **1802** in which the ECV is available for rental to potential renters. If the user is not currently renting the ECV, then the user may select to rent the ECV. If the user is currently renting the ECV, then the user may select to return the ECV to stop the rental process and allow others to rent the ECV. A second option **1804** may allow for a current user/renter of the ECV to start running the ECV. Alternatively, the second option **1804** may allow for the ECV to be used without having to be rented, such as in a tour group. A help option **1806** may be selected to provide help information to a user or potential user, where the help information may include pricing information, operation information, or any other information in a list or search format, for example, of the ECV.

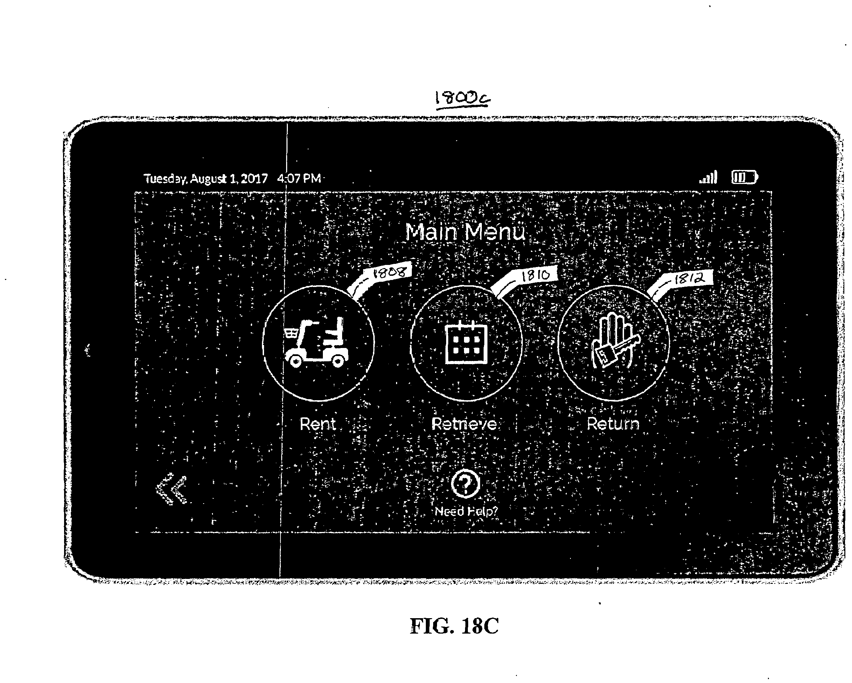

With regard to **FIG. 18C****,** a screenshot of an illustrative user interface **1800c** of a CCU that enables users or potential users to rent, retrieve, or return an ECV is shown. A rent soft-button **1808** may allow for a potential user to initiative a rental process to rent the ECV. The rental of the ECV may be performed directly on the ECV, thereby allowing for users to rent the ECVs without having to go to a central rental kiosk that, if busy, will create a line and limit rental desires of users. That is, having the rental capability directly on the ECV, the users may more efficiently rent the ECVs. Moreover, by providing rental capabilities without having to use a mobile device, such as a smartphone, anyone with or without a personal mobile device may be able to rent the ECVs. A retrieve soft-button **1810** may allow for a user to determine a prescheduled date and time of rental. A return soft-button **1812** may allow for a user to return the rented ECV. In returning the ECV, the return may be made by simply selecting to return the ECV by pressing the Return soft-button **1812** and going through a checkout process (e.g., confirmation screen, payment identification screen, and receipt screen).

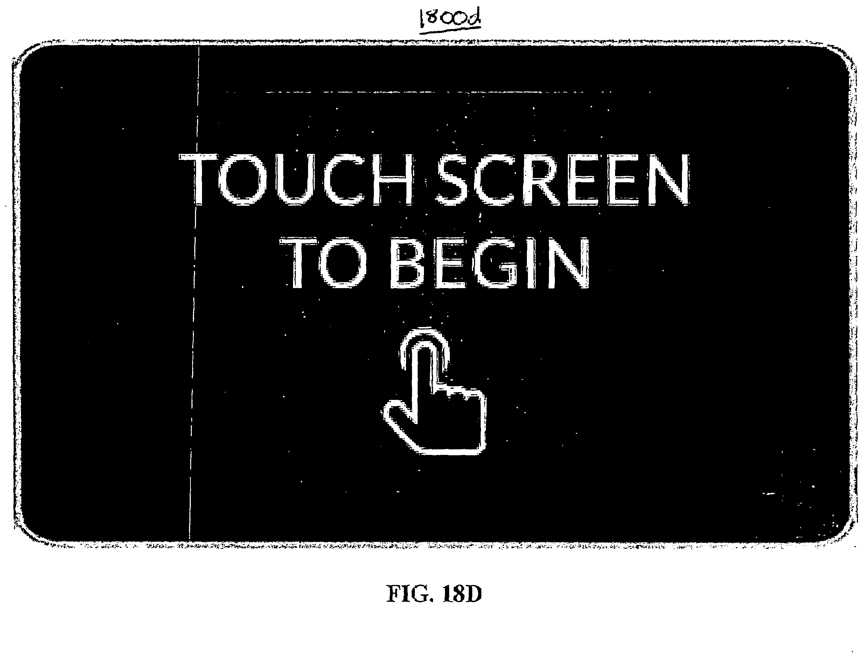

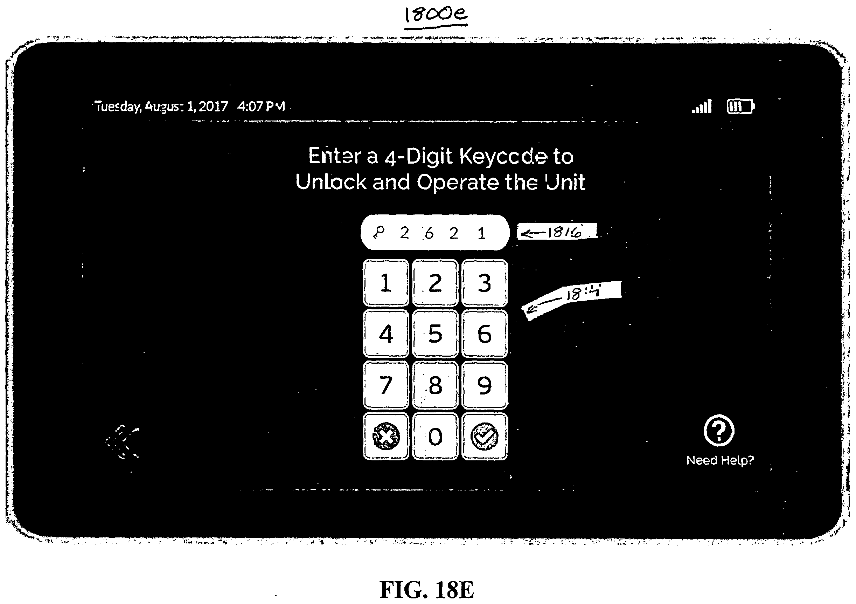

With regard to **FIG. 18D****,** an illustrative user interface **1800d** that may operate as a sleep-mode screen displayed prior to or during rental of the ECV being rented is shown. In response to a user touching the screen, the rental process or continued operation process may begin, as provided in **FIG. 18E****.** As shown in **FIG. 18E****,** an illustrative user interface **1800e** is shown to include a soft-keypad **1814** via which a user may type a keycode, such as a 4-digit keycode, to be used to lock and unlock the CCU of the ECV. The keycode may be displayed in a text field **1816** as the user is typing his or her keycode. In an alternative embodiment, a keycode may be generated and assigned to the user for use with the CCU of the ECV. In an embodiment, the numbers may be temporarily displayed and then masked by an asterisk or other character to limit the ability for others to see the keycode. Thereafter, if the user stops using the ECV for a period of time, such as 5 or 10 minutes and a sleep-mode screen is displayed, the user may be asked to enter his or her keycode to re-access the CCU to operate the ECV.

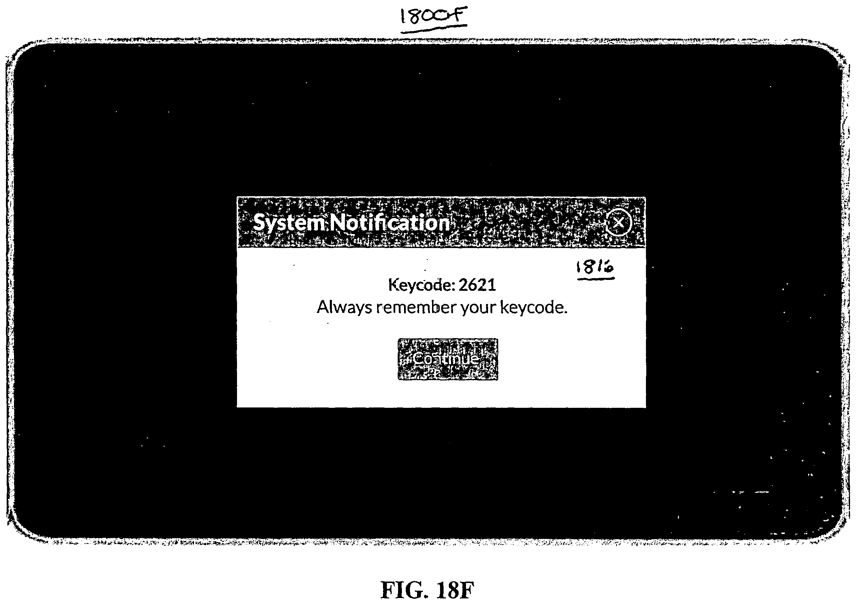

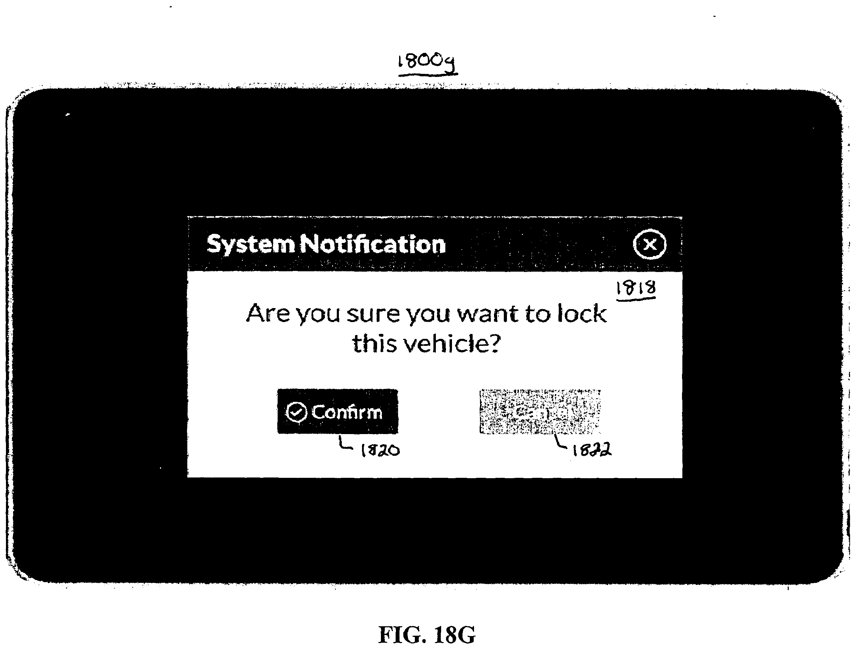

In **FIG. 18F****,** an illustrative user interface **1800f** may display an illustrative pop-up notification **1816** that displays the keycode with a message to remind the user to remember his or her keycode for later use to unlock and access the CCU for operation of the ECV. With regard to **FIG. 18G****,** an illustrative user interface **1800g** may be displayed with a system notification **1818** in response to a user selecting to lock the CCU is shown. The system notification **1818** may include a "confirm" soft-button **1820** and a "cancel" soft-button **1822** that allows for the user to confirm or cancel locking the CCU. If the user confirms that he or she wants to lock the CCU, then the user may be requested to re-enter his or her passcode to unlock the CCU.

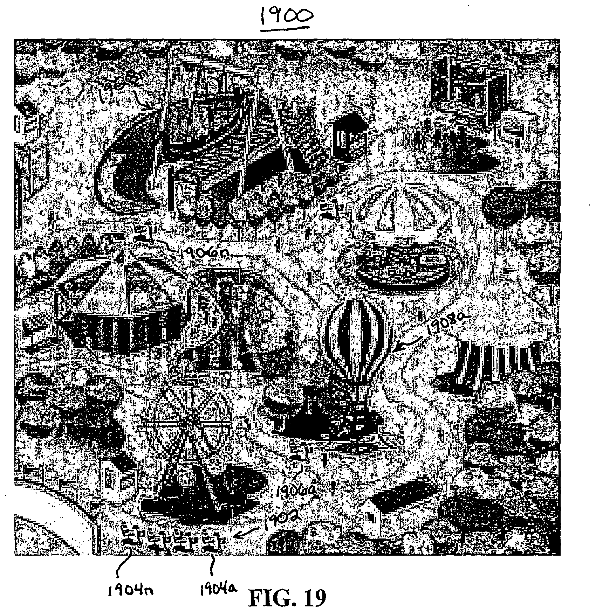

With regard to **FIG. 19****,** an illustration of an illustrative venue **1900,** in this case an amusement park, in which a rental area **1902** with ECVs **1904a-1904n** (collectively **1904)** may be rented is shown. Once rented, rented ECVs **1906a-1906n** (collectively **1906)** may travel throughout the venue **1900.** The rented ECVs **1906** may be driven around the venue **1900** by the users. In some embodiments, the rented ECVs **1906** may be rented and the rental may be ended anywhere in the venue **1900** without having to be returned back to the rental area **1902** as the CCUs may provide for rental at the ECV. In other embodiments, the rentals and termination of rentals have to be performed in the rental area **1902,** thereby allowing for venue attendants to more easily manage the ECVs.

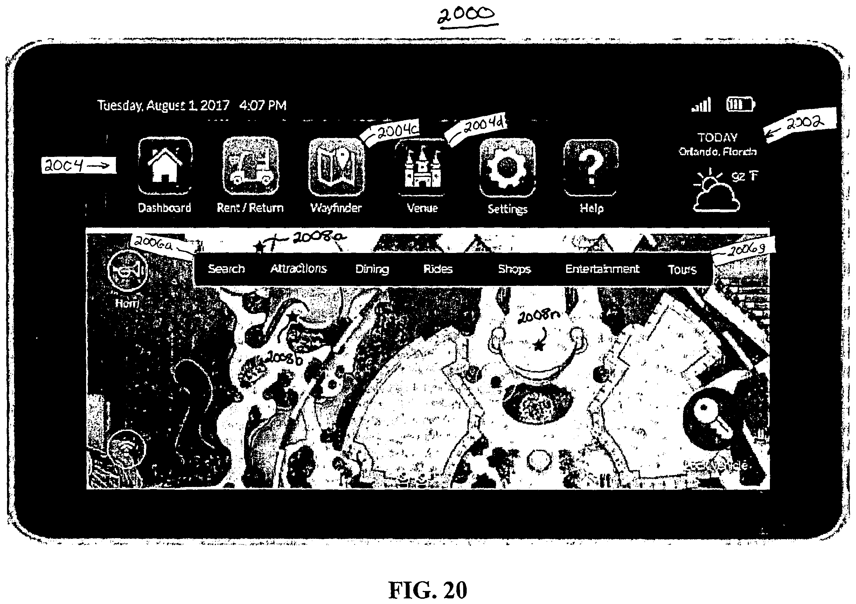

With regard to **FIG. 20****,** an illustrative CCU **2000** that displays a user interface **2002** with which a user of an ECV is shown. The user interface **2002** may provide the user with a number of selectable options **2004,** including "Dashboard" option, "Rent/Return" option, "Wayfinder" option, "Venue" option, "Settings" option, and "Help" option. In response to the user selecting the "Wayfinder" option **2004c,** a map of the venue may be displayed with a number of selectable options **2006a-2006g** (collectively **2006)** for a user to select for accessing information associated with the venue. The options may include a "Search" option **2006a,** "Attractions" option **2006b,** "Dining" option **2006c,** "Rides" option **2006d,** "Shops" option **2006e,** "Entertainment" option **2006f,** and "Tours" option **2006g,** for example.

Selection of the "Search" option **2008a** may be selected to enable a user to search for information associated with the venue. The information may be limited to locations, such as rides, restaurants, and attractions at the venue, or may be used to search for content, such as videos associated with the venue. In response to the search, information, such as names and/or images of locations or content may be selectably displayed to enable a user to read, view, and/or select for additional information to be downloaded, displayed, and/or highlighted on the map.

Selection of the "Attractions" option **2008b** may cause images and/or highlights of attractions **2008a-2008n** (collectively **2008)** to be displayed on the map. The user may be able to touch or otherwise select the attractions on the map to be provided with additional information of the selected attractions, such as times of operation, current wait time, height requirements, and so on. In addition, directions to a selected attraction may be provided to the user via the user interface **2002.** In an embodiment, the directions may factor in time of day to determine the directions. For example, if the time of day is around lunchtime, then the directions may include a pathway that passes one or more restaurants in an effort to have the user of the ECV stop at a restaurant. If the time of day is mid-afternoon, then the directions may include passing by one or more gaming area in an attempt to encourage the user to stop and play games, thereby possibly earning revenue for the venue. Other factors, such as traffic along a route, age of the user and/or individuals associated with the user, or otherwise, for determining directions to an attraction may be factored into determining directions. The CCU may include geolocation capabilities to assist with providing directions for the user via the user interface **2002.** In an embodiment, the directions may be provided in response to selecting the "Wayfinder" soft-button **2004c.** The directions, which may include displaying a route line on pathway(s) to the desired attraction, may be displayed to assist a user to travel to the destination location. The "Attractions" soft-button 2008b may also provide for wait times at rides or attractions, and sort the attractions based on wait time and/or distance therefrom optionally to be selectable by a user for directions.

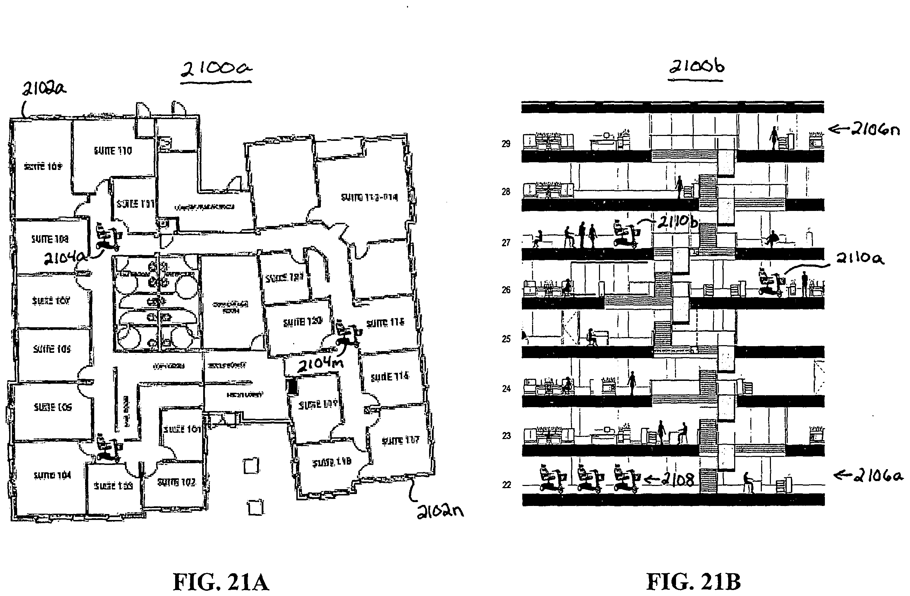

With regard to **FIGS. 21A** and **21B****,** illustrations of a top view and side view of another venue **2100a** and **2100b,** in this case a hospital, in which ECVs with CCUs are operating are shown. The venue **2100a** is shown to include multiple suites **2102a-2102n** (collectively **2102)** on a particular floor. A user interface on a CCU may enable a user to select from amongst floors in which the ECVs may travel to be displayed. Also shown on the floor are a number of ECVs **2104a-2104m** (collectively **2104)** that are currently located on the floor. In an embodiment, the ECVs **2104** may be displayed in different colors or with different representations to distinguish available ECVs from unavailable ECVs (i.e., currently in-use versus not-in-use ECVs), thereby allowing for a user or potential user to find an ECV to use. The ECVs **2104** may be rentable or freely available for use. A number of floors **2106a-2106n** (collectively **2106)** may be displayed to show which floors are available for ECVs to be ridden. In an embodiment, a rental area **2108** of rentable ECVs may be shown along with currently rented ECVs **2110a** and **2110b** shown on respective floors. In an embodiment, the illustrations in FIGS. **21A** and **21B** may be user interfaces for an operator of the ECVs to manage and track location of the ECVs, where the user interfaces may be available on a computer, mobile device, and/or CCU of an ECV.

One embodiment of a method for operating an electric convenience vehicle may include enabling a user of the ECV to control direction of movement. At least one wheel may be caused to be propelled forward, propelled backward, or to remain in a fixed position in response to the user respectively activating a throttle in a forward position, in a second position, and in an idle position. The user may be enabled to communicate over a communications network via a command and communications unit (CCU).

In an embodiment, the process may further generate sense signals indicative of an object being sensed in response to detecting an object in front of a direction of travel of the ECV, and control movement of the ECV as a function of the sense signals. The process may further include (i) displaying operational and non-operational data of the ECV, (ii) communicating with a communications network, and (iii) limiting the ECV to (1) a first maximum speed when no objects are detected based on the sense signal, and (2) a second maximum speed when an object is detected based on the sense signal. The process, in displaying the operational data, may include displaying speed of the ECV, and where displaying non-operational data includes displaying information associated with a venue in which the ECV is operating. Displaying non-operational data may include displaying venue-centric directional information.

Limiting the ECV to the first maximum speed may include limiting the ECV to a maximum speed that is higher than the second maximum speed. In response to the user rotating a steering mechanism, objects in front of an angle of a front face of the steering mechanism may be sensed. Responsive to sensing an object, recording of images may be initiated, and responsive to the object no longer being sensed, recording of the images may be stopped.

Sensing objects may include sensing objects within a proximity of the ECV. The user may be enabled to request directions within the venue. Moreover, the process may include (i) sensing that the motor is on and that the user transitions from being supported by a user support member (e.g., seat, vertical rest member, bench, standing surface, resting surface) to not being supported by the user support member, and (ii) generating a delay to establish a time period during which a determination as to whether the user is sensed to return being supported by the user support member within the time period before enabling the motor to turn off. The process may further include sensing when the user is being supported by a user support member, and further causing the CCU to enter a sleep mode in response to the sensor not sensing that the user is being supported by the user support member, and preventing the CCU from entering the sleep mode in response to sensing that the user is being supported by the user support member.

The process may further include executing, by the CCU, an application that receives signals from a network server, and further comprising displaying interactive information for the user. The process may further include enabling the user to receive information associated with rental of the ECV from a remote device, the information including a unique identifier that enables the user to access operation of the ECV. The user may further be enabled to rent the ECV directly from the CCU. The user may be enabled to rent the ECV includes presenting the user interface via which the user can specify duration of rental, submit payment, and submit a unique identifier. The user may be enabled to reserve a CCU at a later time. Images of the ECV may be captured.

The foregoing method descriptions and the process flow diagrams are provided merely as illustrative examples and are not intended to require or imply that the steps of the various embodiments must be performed in the order presented. As will be appreciated by one of skill in the art, the steps in the foregoing embodiments may be performed in any order. Words such as "then," "next," etc. are not intended to limit the order of the steps; these words are simply used to guide the reader through the description of the methods. Although process flow diagrams may describe the operations as a sequential process, many of the operations may be performed in parallel or concurrently. In addition, the order of the operations may be re-arranged. A process may correspond to a method, a function, a procedure, a subroutine, a subprogram, etc. When a process corresponds to a function, its termination may correspond to a return of the function to the calling function or the main function.

The various illustrative logical blocks, modules, circuits, and algorithm steps described in connection with the embodiments disclosed here may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to and/or in communication with another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code being understood that software and control hardware can be designed to implement the systems and methods based on the description here.

When implemented in software, the functions may be stored as one or more instructions or code on a non-transitory computer-readable or processor-readable storage medium. The steps of a method or algorithm disclosed here may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used here, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The previous description is of a preferred embodiment for implementing the invention, and the scope of the invention should not necessarily be limited by this description. The scope of the present invention is instead defined by the following claims.

## Claims

1. An electric convenience vehicle, ECV, (100), comprising:
a frame;
a plurality of wheels (104) configured to support and move the frame;
a user support member (106) supported by said frame at which a user is positioned in operating the ECV;
a steering mechanism (108) disposed toward a front portion of the ECV, and configured to enable the user to rotate direction of at least one wheel to control direction of movement of the ECV;
a motor configured to cause at least one wheel to be propelled forward, propelled backward, or to remain in a fixed position;
a throttle (112), when activated in a first position, causes said motor to propel said at least one wheel in a forward direction, when activated in a second position, causes said motor to propel said at least one wheel in a reverse direction, and when in a third position, causes said motor to maintain said at least one wheel in a fixed position;
a control and communications unit, CCU, (102) disposed in front of said user support member, and configured to communicate over a communications network;
at least one sensor (114a-114c) directed to detect objects in front of a direction of travel of the ECV, and configured generate sense signals indicative of an object being sensed by said at least one sensor; wherein said control and communications unit, CCU, 102 is further configured to receive the sense signals and to control operations of said motor as a function of the sense signals; and
a camera (132) oriented to face forward of the ECV, and, responsive to said sensors sensing an object within sensing proximity of the sensors, initiate recording of images captured by said camera, and responsive to the object no longer being sensed within the sensor proximity of sensors, initiate stopping recording of images by said camera.

2. A method for operating an electric convenience vehicle, ECV, (100) according to claim 1, comprising:
enabling a user of the ECV to control direction of movement;
causing at least one wheel (104) to be propelled forward, propelled backward, or to remain in a fixed position in response to the user respectively activating a throttle (112) in a forward position, in a second position, and in an idle position;
enabling the user to communicate over a communications network via a control and communications unit, CCU, (102);
in response to detecting an object in front of a direction of travel of the ECV, generating sense signals indicative of an object being sensed;
controlling movement of the ECV as a function of the sense signals; and
responsive to sensing an object, initiating recording of images, and responsive to the object no longer being sensed, initiating stopping recording of images.

3. The method according to claim 2, further comprising:
displaying operational and non-operational data of the ECV;
communicating with a communications network; and
limiting the ECV to a first maximum speed when no objects are detected based on the sense signal, and a second maximum speed when an object is detected based on the sense signal.

4. The method according to claim 3, wherein displaying the operational data includes displaying speed of the ECV, and wherein displaying non-operational data includes displaying information associated with a venue in which the ECV is operating and venue-centric directional information.

5. The method according to claim 3, wherein limiting the ECV to the first maximum speed includes limiting the ECV to a maximum speed that is higher than the second maximum speed.

6. The method according to claim 3, further comprising in response to the user rotating a steering mechanism (108), sensing for objects in front of an angle of a front face of the steering mechanism.

7. The method according to claim 1, wherein sensing objects includes sensing objects within a proximity of the ECV.

8. The method according to claim 7, further comprising enabling the user to request directions within a venue.

## Patentansprüche

1. Ein Elektromobil, ECV, (100), das Folgendes beinhaltet:
einen Rahmen;
eine Vielzahl von Rädern (104), die konfiguriert sind, um den Rahmen zu tragen und zu bewegen;
ein Benutzertragelement (106), das von dem Rahmen getragen wird und auf dem ein Benutzer beim Betätigen des ECV positioniert ist;
einen Lenkmechanismus (108), der an einem vorderen Abschnitt des ECV angeordnet ist und konfiguriert ist, um dem Benutzer zu gestatten, die Richtung mindestens eines Rads zu drehen, um die Bewegungsrichtung des ECV zu steuern;
einen Motor, der konfiguriert ist, um zu bewirken, dass mindestens ein Rad nach vorne geschoben wird, nach hinten geschoben wird oder in einer festen Position bleibt;
einen Gasdrehgriff (112), der bei Aktivierung in einer ersten Position bewirkt, dass der Motor das mindestens eine Rad in eine Vorwärtsrichtung schiebt, bei Aktivierung in einer zweiten Position bewirkt, dass der Motor das mindestens eine Rad in eine Rückwärtsrichtung schiebt und in einer dritten Position bewirkt, dass der Motor das mindestens eine Rad in einer festen Position hält;
eine Steuer- und Kommunikationseinheit, CCU, (102), die vor dem Benutzertragelement angeordnet ist und konfiguriert ist, um über ein Kommunikationsnetzwerk zu kommunizieren;
mindestens einen Sensor (114a-114c), der angewiesen wird, um Objekte vor einer Fahrtrichtung des ECV zu erkennen, und konfiguriert ist, um Abfühlsignale zu generieren, die indikativ für ein Objekt sind, das von dem mindestens einen Sensor abgefühlt wird; wobei die Steuer- und Kommunikationseinheit, CCU, (102) ferner konfiguriert ist, um die Abfühlsignale zu empfangen und die Betätigung des Motors als eine Funktion der Abfühlsignale zu steuern; und
eine Kamera (132), die orientiert ist, um dem ECV voran zu weisen, und als Antwort darauf, dass die Sensoren ein Objekt innerhalb Abfühlnähe der Sensoren abfühlen, das Aufnehmen von Bildern, die von der Kamera erfasst werden, zu initiieren und als Antwort darauf, dass das Objekt innerhalb der Abfühlnähe der Sensoren nicht mehr abgefühlt wird, das Beenden des Aufnehmens von Bildern durch die Kamera zu initiieren.

2. Ein Verfahren zum Betätigen eines Elektromobils, ECV, (100) gemäß Anspruch 1, das Folgendes beinhaltet:
Gestatten, dass ein Benutzer des ECV die Bewegungsrichtung steuern kann;
Bewirken, dass mindestens ein Rad (104) als Antwort darauf, dass der Benutzer einen Gasdrehgriff (112) jeweils in einer Vorwärtsposition, in einer zweiten Position und in einer Ruheposition aktiviert, nach vorne geschoben wird, nach hinten geschoben wird oder in einer festen Position bleibt;
Gestatten, dass der Benutzer über ein Kommunikationsnetzwerk via eine Steuer- und Kommunikationseinheit, CCU, (102) kommuniziert;
als Antwort auf das Erkennen eines Objekts vor einer Fahrtrichtung des ECV,
Generieren von Abfühlsignalen, die indikativ dafür sind, dass ein Objekt abgefühlt wird;
Steuern der Bewegung des ECV als eine Funktion der Abfühlsignale; und
als Antwort auf das Abfühlen eines Objekts, Initiieren des Aufnehmens von Bildern und als Antwort darauf, dass das Objekt nicht mehr abgefühlt wird, Initiieren des Beendens des Aufnehmens von Bildern.

3. Verfahren gemäß Anspruch 2, das ferner Folgendes beinhaltet:
Anzeigen von Betriebsdaten und Nichtbetriebsdaten des ECV;
Kommunizieren mit einem Kommunikationsnetzwerk; und
Begrenzen des ECV auf eine erste Maximalgeschwindigkeit, wenn basierend auf dem Abfühlsignal keine Objekte erkannt werden, und eine zweite Maximalgeschwindigkeit, wenn basierend auf dem Abfühlsignal ein Objekt erkannt wird.

4. Verfahren gemäß Anspruch 3, wobei das Anzeigen der Betriebsdaten das Anzeigen der Geschwindigkeit des ECV umfasst und wobei das Anzeigen der Nichtbetriebsdaten das Anzeigen von Informationen, die mit einem Ort assoziiert sind, in dem das ECV betätigt wird, und ortszentrischen Richtungsinformationen umfasst.

5. Verfahren gemäß Anspruch 3, wobei das Begrenzen des ECV auf die erste Maximalgeschwindigkeit das Begrenzen des ECV auf eine Maximalgeschwindigkeit, die höher als die zweite Maximalgeschwindigkeit ist, umfasst.

6. Verfahren gemäß Anspruch 3, das als Antwort darauf, dass der Benutzer einen Lenkmechanismus (108) dreht, ferner das Abfühlen nach Objekten vor einem Winkel einer vorderen Fläche des Lenkmechanismus beinhaltet.

7. Verfahren gemäß Anspruch 1, wobei das Abfühlen von Objekten das Abfühlen von Objekten innerhalb einer Nähe des ECV umfasst.

8. Verfahren gemäß Anspruch 7, das ferner das Gestatten, dass der Benutzer Richtungsangaben innerhalb eines Orts anfragt, beinhaltet.

## Revendications

1. Un véhicule électrique sans permis (*electric convenience vehicle,* ECV) (100), comprenant :
un châssis ;
une pluralité de roues (104) configurées pour supporter et déplacer le châssis ;
un élément de support d'utilisateur (106) supporté par ledit châssis, au niveau duquel un utilisateur est positionné lorsqu'il fait fonctionner l'ECV ;
un mécanisme de direction (108) disposé vers une portion avant de l'ECV, et configuré pour permettre à l'utilisateur de faire tourner la direction d'au moins une roue afin de commander la direction de déplacement de l'ECV ;
un moteur configuré pour amener au moins une roue à être propulsée vers l'avant, propulsée vers l'arrière, ou à rester dans une position fixe ;
un accélérateur (112) amenant, lorsqu'il est activé dans une première position, ledit moteur à propulser ladite au moins une roue dans une direction vers l'avant, amenant,
lorsqu'il est activé dans une deuxième position, ledit moteur à propulser ladite au moins une roue dans une direction inverse, et amenant, lorsqu'il se trouve dans une troisième position, ledit moteur à maintenir ladite au moins une roue dans une position fixe ;
une unité de commande et de communication (*control and communications unit,* CCU) (102) disposée en face dudit élément de support d'utilisateur, et configurée pour communiquer sur un réseau de communication ;
au moins un capteur (114a à 114c) destiné à détecter des objets en face d'une direction de circulation de l'ECV, et configuré pour générer des signaux de détection indiquant qu'un objet est décelé par ledit au moins un capteur ; ladite unité de commande et de communication, CCU, 102 étant en outre configurée pour recevoir les signaux de détection et pour commander les fonctionnements dudit moteur en fonction des signaux de détection ; et
une caméra (132) orientée afin de faire face au devant de l'ECV, et, en réponse au fait que lesdits capteurs décèlent un objet dans les limites de la proximité de détection des capteurs, lançant l'enregistrement d'images capturées par ladite caméra, et, en réponse au fait que l'objet n'est plus décelé dans les limites de la proximité de détection des capteurs, lançant l'arrêt de l'enregistrement d'images par ladite caméra.

2. Un procédé pour faire fonctionner un véhicule électrique sans permis, ECV, (100) selon la revendication 1, comprenant :
le fait de permettre à un utilisateur de l'ECV de commander la direction de déplacement ;
le fait d'amener au moins une roue (104) à être propulsée vers l'avant, propulsée vers l'arrière, ou à rester dans une position fixe en réponse au fait que l'utilisateur active respectivement un accélérateur (112) dans une position vers l'avant, dans une deuxième position, et dans une position de repos ;
le fait de permettre à l'utilisateur de communiquer sur un réseau de communication par l'intermédiaire d'une unité de commande et de communication, CCU, (102) ;
en réponse au fait qu'un objet est détecté en face d'une direction de circulation de l'ECV, le fait de générer des signaux de détection indiquant qu'un objet est décelé ;
le fait de commander le déplacement de l'ECV en fonction des signaux de détection ; et
en réponse au fait qu'un objet est décelé, le fait de lancer l'enregistrement d'images, et,
en réponse au fait que l'objet n'est plus décelé, le fait de lancer l'arrêt de l'enregistrement d'images.

3. Le procédé selon la revendication 2, comprenant en outre :
le fait d'afficher des données opérationnelles et non opérationnelles de l'ECV ;
le fait de communiquer avec un réseau de communication ; et
le fait de limiter l'ECV à une première vitesse maximale lorsqu'aucun objet n'est détecté sur la base du signal de détection, et à une deuxième vitesse maximale lorsqu'un objet est détecté sur la base du signal de détection.

4. Le procédé selon la revendication 3, dans lequel le fait d'afficher les données opérationnelles inclut le fait d'afficher la vitesse de l'ECV, et dans lequel le fait d'afficher des données non opérationnelles inclut le fait d'afficher des informations associées à un lieu dans lequel l'ECV fonctionne et des informations directionnelles centrées sur un lieu.

5. Le procédé selon la revendication 3, dans lequel le fait de limiter l'ECV à la première vitesse maximale inclut le fait de limiter l'ECV à une vitesse maximale qui est supérieure à la deuxième vitesse maximale.

6. Le procédé selon la revendication 3, comprenant en outre, en réponse au fait que l'utilisateur fait tourner un mécanisme de direction (108), le fait de déceler des objets en face d'un angle d'une face avant du mécanisme de direction.

7. Le procédé selon la revendication 1, dans lequel le fait de déceler des objets inclut le fait de déceler des objets dans les limites d'une proximité de l'ECV.

8. Le procédé selon la revendication 7, comprenant en outre le fait de permettre à l'utilisateur de demander des itinéraires au sein d'un lieu.
